# EUROPÄISCHE PATENTANMELDUNG

(11) **EP 1 162 020 A2**
(43) Veröffentlichungstag der Anmeldung: **12.12.2001**
(21) Anmeldenummer: 01113876.5
(22) Anmeldetag: 07.06.2001
(51) Int. Cl.: B23K 3/02

(54) **Einhand-Lötgerät mit integriertem Lötdepot und dosierbarem Lötangebot**

(30) Priorität: 07.06.2000 DE 20010044 U; 18.07.2000 DE 10034770
(71) Anmelder: Feinler, Siegfried, 78549 Spaichingen (DE)
(72) Erfinder: Feinler, Siegfried, 78549 Spaichingen (DE); Möhwald, Kai, Dr.-Ing., 59399 Olfen (DE); Bach, Friedrich-Wilhelm, Prof. Dr.-Ing., 30916 Isernhagen (DE)
(74) Vertreter: Neymeyer, Franz, Dipl.-Ing. (FH)

(57) **Zusammenfassung**

Die Erfindung betrifft ein Einhand-Lötgerät mit einer heizbaren Lötspitze (1), über welche aus einem Lotdepot (3) einer Fügestelle zweier oder mehrerer Bauteile Lotwerkstoff zugeführt wird. Um einer Fügestelle zweier Bauteile in präzise vordefinierbaren Mengen Lotwerkstoff zuzuführen, ohne daß ein Nachtropfen an der Lötspitze (1) erfolgt, ist die Lötspitze (1) mit wenigstens einer das Lotdepot (3) mit der Oberfläche der Lötspitze (1) verbindenden, mit Lotwerkstoff benetzbaren Kapillare (9) versehen, wobei die Oberfläche der Lötspitze (1) im Umgebungsbereich der Lotaustrittsöffnung (8) der Kapillare (9) lotabweisende, nicht oder nur schwer mit Lotwerkstoff benetzbare Eigenschaften aufweist.

## Beschreibung

Die Erfindung betrifft ein Einhand-Lötgerät mit einer heizbaren Lötspitze, über welche aus einem Lotdepot einer Fügestelle zweier oder mehrerer Bauteile Lotwerkstoff zugeführt wird.

Es sind Einhand-Lötgeräte der gattungsgemäßen Art bekannt, beispielsweise aus der DE 44 35 323 C2, welche mit einer heizbaren Lötspitze versehen sind, über welche aus einem Lotdepot einer Fügestelle zweier Bauteile Lotwerkstoff zugeführt werden kann. Der als Handlötgerät bezeichnete Gegenstand der DE 44 35 323 C2 besteht aus einem wärmeisolierten Griffteil, einer Lötspitze und einer Heizvorrichtung, durch welche die Lötspitze auf eine bestimmte Löttemperatur zum Durchführen eines Lötvorganges aufgeheizt werden kann. Insbesondere ist bei diesem bekannten Handlötgerät im Bereich der Heizvorrichtung eine Aufnahmekammer vorgesehen, aus welcher der Lötspitze über einen Zufuhrkanal Lotwerkstoff zugeführt werden kann. Dazu ist im Bereich der eigentlichen Heizvorrichtung eine Lotkammer vorgesehen, welche zur Aufnahme von Lotwerkstoff dient. Diese Lotkammer ist mit dem Heizelement thermisch gekoppelt, so daß im Betrieb der Lotwerkstoff in der Lotkammer durch das Heizelement in einen schmelzflüssigen Zustand gebracht wird. Zum Ausbringen des in der Lotkammer befindlichen Lotwerkstoffes ist in der Lotkammer ein Lötpreßkolben vorgesehen, der durch einen Druckstempel eines Arbeitszylinders zur Verringerung des Kammervolumens der Lotkammer in die Lotkammer axial eingeschoben wird. Von dieser Lotkammer führt ein Lotwerkstoff-Zufuhrkanal bis zum äußeren Ende der Lötspitze. Damit der Lotwerkstoff durch diesen Lotwerkstoff-Zufuhrkanal im erwärmten Zustand hindurchgelangen kann, besteht die Lötspitze insgesamt aus einem, mit Lotwerkstoff benetzbaren Werkstoff.

Die Zielsetzung beim Zuführen von Lotwerkstoff besteht bei diesem bekannten Handlötgerät darin, daß in Abhängigkeit von der jeweiligen Lötaufgabe Lotwerkstoff in angepaßten, dosierten Mengen an eine Fügestelle zweier Bauteile gebracht werden kann. D.h., daß zum Ausbringen des Lotwerkstoffes der Lötpreßkolben axial verschoben wird und, um den dadurch bewirkten Lotfluß im Lotwerkstoff-Zufuhrkanal wieder stoppen zu können, der Lötpreßkolben in seiner jeweiligen Position arretiert wird. Versuche jedoch haben gezeigt, daß ein Stoppen des Lotflusses durch den Lotwerkstoff-Zufuhrkanal auch bei arretiertem Lötpreßkolben nicht definiert durchführbar ist. Es hat sich gezeigt, daß eine derart ausgebildete Lötspitze mit ihrem Lotwerkstoff-Zufuhrkanal stets nachtropft, so daß eine definierte Zufuhrmenge durch eine derart gestaltete Lötspitze in Zusammenhang mit einem derart ausgebildeten Lotdepot nur bedingt für Lötaufgaben, insbesondere für Aufgaben im Feinlötbereich, eingesetzt werden kann.

Um ein solches Nachtropfen zu verhindern, sind weitere Einhand-Lötgeräte bekanntgeworden, bei welchen ein poröser Werkstoff, insbesondere ein Sinterwerkstoff, für die Lötspitze verwendet werden soll. Hierzu sei insbesondere auf die US 1,760,519, die US 3,651,306 sowie auf die US 3,439,857 beispielhaft verwiesen. All diesen bekannten Einhand-Lötgeräten bzw. die für Einhand-Lötgeräte vorgesehenen Lötspitzen ist gemeinsam, daß das Lötdepot insbesondere durch die poröse Struktur der Lötspitze selbst oder einen in der Lötspitze befindlichen Hohlraum gebildet werden soll. Durch die Kapillarwirkung der Poren des porösen Werkstoffes soll dabei erreicht werden, daß die Lötspitze erst bei Berührung mit den zu fügenden Bauteilen Lotwerkstoff abgibt. Es hat sich jedoch auch in diesem Falle gezeigt, daß diese Lötspitzen aus porösem Werkstoff stets nachtropfen. Desweiteren ist auch zu beobachten, daß die Lebensdauer bzw. die Einsatzmöglichkeiten solcher Lötspitzen aus porösem Werkstoff äußerst beschränkt ist bzw. sind, da die in den angegebenen Druckschriften verwendeten Werkstoffe äußerst schnell ihre Aufnahmefähigkeit für Lotwerkstoff verlieren und somit eine Herstellung einer Vielzahl von Lötverbindungen nur äußerst eingeschränkt möglich ist.

Der Erfindung liegt demgemäß die Aufgabe zugrunde, ein Einhand-Lötgerät derart auszugestalten, daß aus einem Lotdepot einer Fügestelle zweier Bauteile über eine Lötspitze gezielt und in präzise vordefinierbaren Mengen Lotwerkstoff zugeführt werden kann, ohne daß ein Nachtropfen an der Lötspitze erfolgt, wobei gleichzeitig die Möglichkeit zur Herstellung einer Vielzahl von Lötstellen gegeben sein soll.

Die Aufgabe wird erfindungsgemäß dadurch gelöst, daß die Lötspitze wenigstens eine das Lotdepot mit der Oberfläche der Lötspitze verbindende, mit Lotwerkstoff benetzbare Kapillare aufweist, und daß die Oberfläche der Lötspitze im Umgebungsbereich der Lotaustrittsöffnung der Kapillare lotabweisende, nicht oder nur schwer mit Lotwerkstoff benetzbare Eigenschaften aufweist.

Durch die erfindungsgemäße Ausgestaltung des Einhand-Lötgerätes ist eine dosierte Zufuhr von Lotwerkstoff aus einem Lotdepot an eine Fügestelle zweier Bauteile in vorbestimmbaren Mengen sicher durchführbar, ohne daß ein Nachtropfen von Lotwerkstoff erfolgt. Dazu ist eine Lötspitze vorgesehen, die eine mit Lotwerkstoff benetzbare Kapillare aufweist. Diese Kapillare verbindet das Lotdepot mit der Oberfläche der Lötspitze. Im Umgebungsbereich der Lotaustrittsöffnung der Kapillare weist die Oberfläche der Lötspitze lotabweisende, nicht oder nur schwer mit Lotwerkstoff benetzbare Eigenschaften auf. Solche Eigenschaften sind in unterschiedlicher Weise erreichbar. So kann in diesem Umgebungsbereich die Oberfläche der Lötspitze beispielsweise mit einem lotabweisenden Werkstoff mit entsprechenden Eigenschaften, wie beispielsweise einer Chrombeschichtung oder auch jedem anderen Werkstoff mit den entsprechenden Eigenschaften beschichtet sein. Die Lotaustrittsöffnung wird dabei im wesentlichen vollständig in ihrem Umgebungsbereich von einem solchen Werkstoff umschlossen, so daß sich der aus der Kapillare austretende Lotwerkstoff auf der Oberfläche der Lötspitze gar nicht oder nur begrenzt ausbreiten kann. Durch den Kapillardruck innerhalb der Kapillare wird an die Lotaustrittsöffnung ständig Lotwerkstoff nachgefördert, so daß sich an der Lötspitze bzw. im Bereich der Lotaustrittsöffnung ein mehr oder weniger großen Lottropfen ausbildet. Dieser Lottropfen weist aufgrund der Eigenschaften des Lotwerkstoffes eine gewisse Oberflächenspannung auf, durch die eine dem Kapillardruck entgegenwirkende Gegenkraft bewirkt wird. Mit zunehmender Größe des Lottropfens vergrößert sich die Oberflächenspannung, so daß auch die dem Kapillardruck entgegenwirkenden Gegenkräfte größer werden. Bei einer vorbestimmbaren Tropfengröße stellt sich ein Gleichgewicht zwischen der Gegenkraft aufgrund der Oberflächenspannung des Lottropfens und des Kapillardruckes innerhalb der Kapillare ein, so daß bei Erreichen dieser bestimmten Größe des Lottropfens ein weiteres Nachfließen von Lotwerkstoff aus der Kapillare zur Lotaustrittsöffnung verhindert wird. Dies hat wiederum zur Folge, daß der Lottropfen nur eine vorbestimmte Größe annehmen kann und somit nicht von der Lötspitze abreißt, so daß diese nicht "nachtropft". Die Größe des zu erreichenden Lottropfens ist dabei im wesentlichen von der Größe des noch mit Lotwerkstoff benetzbaren Bereiches im Umgebungsbereich der Lotaustrittsöffnung auf der Oberfläche der Lötspitze abhängig. Je größer dieser benetzbare Umgebungsbereich im Bereich der Lotaustrittsöffnung auf der Oberfläche der Lötspitze ist, um so größer kann sich auch der Lottropfen ausbilden. Desweiteren ist die Größe dieses Lottropfens auch vom Durchlaßquerschnitt der Kapillare innerhalb der Lötspitze abhängig, durch welchen die Größe der Kapillarkräfte bestimmt wird. Dies bedeutet, daß je größer der Kapillarquerschnitt ausgebildet ist, um so größer wird sich auch im Bereich der Lotaustrittsöffnung ein Lottropfen ausbilden.

Durch diese spezielle erfindungsgemäße Ausgestaltung einer mit Lotwerkstoff benetzbaren Kapillare in Verbindung mit der im Umgebungsbereich der Lotaustrittsöffnung liegenden Oberfläche der Lötspitze, welche nicht oder nur schwer mit Lötwerkstoff benetzbar ist, ist somit eine vordefinierbare Größe eines sich ausbildenden Lottropfens erreichbar, so daß die für einen Lötvorgang zur Verfügung stehende Lotmenge durch entsprechende Ausgestaltung sowohl der Kapillare als auch des Umgebungsbereiches der Lotaustrittsöffnung genau definierbar ist.

Wird nun ein Lötvorgang eingeleitet, so wird der sich am Ende der Lötspitze ausbildende Lottropfen mit der Fügestelle zweier Bauteile in Kontakt gebracht, so daß diese Fügestelle auf die gewünschte Löttemperatur gebracht wird. Mit Erreichen der gewünschten Löttemperatur an der Fügestelle verbindet sich der Lottropfen mit der Fügestelle, so daß die vorhandene Oberflächenspannung reduziert wird und Lotwerkstoff in beliebiger Menge aus der Kapillare der Fügestelle zugeführt werden kann. Wird die erfindungsgemäße Lötspitze von der Fügestelle wieder abgenommen, so bildet sich erneut ein Lottropfen in vorbestimmter Größe, bis die Oberflächenspannung und der Kapillardruck innerhalb der Kapillare wieder in einem hydrostatischen Gleichgewicht stehen. Ein Nachtropfen der Lötspitze wird somit sicher verhindert. Desweiteren kann eine wohldefinierte Lotmenge an die Fügestelle gebracht werden, so daß einwandfreie Lötstellen sicher erreichbar sind. Mit der automatischen neuerlichen Ausbildung eines Lottropfens an der Lötspitze ist diese sofort für einen weiteren Lötvorgang wider einsetzbar. Die Anzahl der herstellbaren Lötverbindungen ist dabei im wesentlichen von der benötigten Lotmenge je Lötverbindung und der Größe des Lotdepots abhängig.

Gemäß Anspruch 2 kann die Kapillare der Lötspitze durch eine vom Lotdepot zum äußeren Ende der Lötspitze führende Bohrung gebildet sein. Der Durchmesser dieser Bohrung kann dabei äußerst gering gewählt werden, wodurch auch die Kapillarkräfte am Ende der Bohrung äußerst gering sind und sich somit auch nur ein äußerst kleiner Lottropfen ausbilden kann. Durch diese erfindungsgemäße Ausgestaltung gemäß Anspruch 2 wird eine äußerst einfache Herstellung der Kapillare und somit der gesamten Lötspitze erreicht. Bei dieser speziellen Ausgestaltung kann der Grundkörper der Lötspitze, in welchem die Kapillare angeordnet ist, beispielsweise aus einer mit Lotwerkstoff benetzbaren Kupferlegierung gebildet sein, so daß die Kapillare ebenfalls mit Lotwerkstoff benetzbar ist. Der Grundkörper wird im Bereich der Lotaustrittöffnung der Kapillare mit einer nicht mit Lotwerkstoff benetzbaren Beschichtung versehen, so daß sich der im Bereich der Lotaustrittöffnung ausbildende Lottropfen nicht ungehindert über die Lötspitze ausbreiten und nur eine vordefinierbare Größe annehmen kann.

Eine weitere einfache und somit kostengünstige Herstellung der Lötspitze wird durch die Ausgestaltung gemäß Anspruch 3 erreicht. So weist die Lötspitze einen Grundkörper auf, der aus einem nichtbenetzbaren Werkstoff besteht. Dadurch wird erreicht, daß die Oberfläche des Grundkörpers insbesondere im Umgebungsbereich der Kapillare nicht separat beschichtet werden muß. Die Kapillare wird gemäß Anspruch 3 durch ein in den Grundkörper eingesetztes Kapillarröhrchen gebildet, das aus einem mit Lotwerkstoff benetzbaren Werkstoff besteht. Ein solcher Werkstoff kann z.B. eine Kupferlegierung oder auch jede andere Werkstoffkombination sein, welche ausgezeichnete, mit Lotwerkstoff benetzbare Eigenschaften aufweist. Bei der Ausgestaltung gemäß Anspruch 3 kann beispielsweise die im Umgebungsbereich der Lotaustrittsöffnung liegende, noch mit Lotwerkstoff benetzbare Oberfläche der Lötspitze in einfacher Weise durch die Wandstärke des eingesetzten Kapillarröhrchens festgelegt werden. Aufgrund dieser Wandstärke bildet das Kapillarröhrchen im Bereich der Lotaustrittsöffnung eine mit Lotwerkstoff benetzbare Ringfläche, von deren Gesamtoberfläche die Größe des sich ausbildenden Lottropfens bestimmt wird. In gleicher Weise kann auch durch die entsprechende Vorgabe des lichten Durchmessers des Kapillarröhrchens die Größe des sich ausbildenden Lottropfens bestimmt werden.

Eine weitere Möglichkeit zur Bildung der Kapillare der Lötspitze stellt die Merkmalskombination gemäß Anspruch 4 dar. Dabei besteht die Lötspitze aus zwei aufeinanderliegenden Spitzenteilen, deren Kontaktflächen mit Lotwerkstoff benetzbar sind. Diese Kontaktflächen bilden dabei die eigentliche Kapillare der Lötspitze. Diese Kapillare steht selbstverständlich mit einem entsprechenden Lotdepot, das ebenfalls in der Lotspitze integriert sein kann, in Verbindung. Um ein definiertes Ausbringen von Lotwerkstoff und auch eine definierte Größe einer sich beispielsweise am äußeren Ende der Lötspitze befindlichen Lotaustrittöffnung zu erreichen, sind die beiden Spitzenteile auf ihren Außenflächen nicht mit Lotwerkstoff benetzbar, was, wie bereits oben erwähnt, durch eine entsprechende Beschichtung dieser Außenflächen erreicht werden kann.

Gemäß Anspruch 5 können die beiden Spitzenteile durch ein elastisches Federelement miteinander in Verbindung gehalten werden. Durch dieses elastische Federelement wird der Anpreßdruck der beiden Spitzenteile mit seinen Kontaktflächen bestimmt. Dieser Anpreßdruck wirkt im Betrieb dem in der Kapillare wirkenden Kapillardruck entgegen. Somit kann der Kapillardruck durch den elastischen Federdruck und somit auch die jeweils gewünschte Zuführmenge an Lotwerkstoff über die Federkraft des Federelementes eingestellt werden.

Dazu ist gemäß Anspruch 6 die Federkraft des Federelementes, mit welcher die Spitzenteile über ihre Kontaktflächen gegeneinandergedrückt werden, variabel einstellbar.

Zur Bildung einer definierten Lotaufnahmefläche im Bereich der Lotaustrittsöffnung, welche mit Lotwerkstoff benetzbar ist, überragt gemäß Anspruch 7 das eine Spitzenteil der Lötspitze das andere Spitzenteil zum freien Ende der Lötspitze hin zumindest minimal. Dabei bildet die eine Kontaktfläche des überstehenden Teils des einen Spitzenteils eine mit Lotwerkstoff benetzbare Lotaufnahmefläche. Durch die Wahl der Größe dieser Lotaufnahmefläche kann somit in einfacher Weise die Größe des sich ausbildenden Lottropfens in einfacher Weise beeinflußt werden. Je größer die Lotaufnahmefläche, desto größer der Lottropfen und umgekehrt. Es ist hierbei lediglich darauf zu achten, daß die Lotaufnahmefläche nicht zu groß wird, so daß auch der sich ausbildende Lottropfen ebenfalls in seiner Größe derart begrenzt bleibt, daß er sich nicht selbsttätig von der Lotaufnahmefläche ablösen kann. Die Größe dieser Lotaufnahmefläche kann dabei bis zu etwa 2,5 mm² betragen, was im wesentlichen von der zu erfüllenden Lötaufgabe einerseits und andererseits auch von der Ausbildung der Kapillare und somit vom dadurch bestimmten Kapillardruck abhängig ist.

Um die Lötspitze an unterschiedliche Lötaufgaben anpassen zu können, ist gemäß Anspruch 8 der Überstand des überragenden Teils des einen Spitzenteils gegenüber dem anderen Spitzenteil variabel einstellbar. Durch diese variable Einstellbarkeit des Überstandes wird auch die Größe der Lotaufnahmefläche bestimmt, wodurch auch die Größe des sich ausbildenden Lottropfens eingestellt wird.

Gemäß Anspruch 9 kann die Lötspitze auch nach Art einer Schreibfeder eines Füllfederhalters aufgebaut sein. Dies ist insbesondere zur Durchführung von äußerst feinen Lötarbeiten von Vorteil, da sich mit dieser speziellen Ausgestaltung nur äußerst kleine Lottropfen am Ende der Lötspitze ausbilden können. Dazu weist die Lötspitze einen Grundkörper auf, an welchem eine nach Art einer Schreibfeder eines Füllfederhalters ausgebildete Lötfeder befestigt ist. Diese Lötfeder weist einen Lotspalt auf, der die Kapillare bildet. Dieser Lotspalt erstreckt sich dabei bis zum äußeren Ende der Lötfeder. Um ein undefiniertes Nachfließen von Lotwerkstoff zu verhindern, besteht die Oberfläche der Lötfeder aus einem nichtbenetzbaren Werkstoff, während die einander zugewandten Innenflächen des Lotspaltes mit Lotwerkstoff benetzbar sind. Eine solche Ausgestaltung kann durch eine entsprechende Oberflächenbeschichtung einer Lötfeder erreicht werden, deren Grundkörper aus einem mit Lotwerkstoff benetzbaren Werkstoff besteht. Damit wird in einfacher Weise erreicht, daß die Innenflächen des Lotspaltes mit Lötwerkstoff benetzbar sind, während die sonstige Oberfläche der Lötfeder nicht mit Lotwerkstoff benetzbar ist.

Gemäß Anspruch 10 kann der Lotspalt der Lötfeder über eine Zuführbohrung und/oder eine Zuführkapillare mit dem Lotdepot verbunden sein. Durch diese Ausgestaltung gemäß Anspruch 10 kann bei entsprechender Ausbildung und Anordnung der Lötfeder diese beispielsweise auch mit einer der Lötspitzen gemäß der vorangegangenen Ansprüche 1 bis 8 kombiniert werden.

Gemäß Anspruch 11 können auch unterschiedliche Lötfedern vorgesehen sein, deren äußeres Ende als halbkugelförmige oder kugelförmige Lötkugel ausgebildet ist. Diese Lötkugeln können dabei einen unterschiedlichen Durchmesser aufweisen und/oder unterschiedlich große mit Lotwerkstoff benetzbare Lotaufnahmeflächen im unmittelbaren Umgebungsbereich des sich in der Lötkugel fortsetzenden Lotspaltes aufweisen. Durch diese unterschiedlich großen mit Lotwerkstoff benetzbaren Lotaufnahmeflächen wird wiederum eine unterschiedlich große Ausprägung eines sich ausbildenden Lottropfens erreicht. Die Größe dieser Lotaufnahmefläche wird dabei gemäß Anspruch 11 durch eine entsprechende, nicht mit Lotwerkstoff benetzbare Beschichtung der Lötfeder begrenzt, welche diese Lotaufnahmefläche beispielsweise kreisförmig begrenzt. Durch diese unterschiedlichen Lötfedern ist das erfindungsgemäße Einhand-Lötgerät in einfachster Weise an die unterschiedlichsten Lötbedingungen, insbesondere im Bereich des Feinlötens anpaßbar. Je größer die Lotaufnahmefläche bzw. die Lötkugel, desto größer ist die Ausbildung des Lottropfens an der Lötkugel. Somit lassen sich durch einfaches Austauschen der Lötfedern am Grundkörper der Lötspitze unterschiedliche Größen von sich ausbildenden Lottropfen erreichen und somit das Einhand-Lötgerät in einfachster Weise an unterschiedliche Lötaufgaben anpassen.

Gemäß Anspruch 12 kann das Lotdepot aus einer in der Lötspitze angeordneten, nach außen offenen Kaverne gebildet sein. Durch diese Ausgestaltung wird ein Lotdepot zur Verfügung gestellt, das in unmittelbarer Nähe der Kapillare liegt und somit thermisch in einer äußerst einfachen Art und Weise mit der Heizvorrichtung des Einhand-Lötgerätes gekoppelt werden kann. Dadurch, daß die Kaverne nach außen offen zugänglich ist, ist ein Nachfüllen von verbrauchtem Lotwerkstoff ebenfalls in einfacher Art und Weise durchführbar.

Dazu weist die Kaverne gemäß Anspruch 13 eine Einfüllöffnung auf. Gemäß Anspruch 13 kann die Einfüllöffnung derart ausgestaltet sein, daß auf diese eine zusätzliche Lotpatrone auswechselbar aufgesetzt werden kann. Durch diese zusätzliche Lotpatrone ist somit das zur Verfügung stehende Lotvolumen an Lotwerkstoff vergrößerbar, so daß die Anzahl der durchzuführenden Lötarbeiten erheblich vergrößert werden kann. Die Lotpatrone ist dabei mit der Lötspitze im aufgesetzten Zustand thermisch gekoppelt, so daß ein Aufschmelzen des sich in der Lotpatrone befindliche Lotwerkstoffes sichergestellt ist.

Zur weiteren Erweiterung des Einsatzbereiches, insbesondere Vergrößerung der Anzahl der durchführbaren Lötaufgaben, kann gemäß Anspruch 14 das Lotdepot aus einer auswechselbar in der Lötspitze oder im Bereich einer Heizvorrichtung des Einhand-Lötgerätes angeordneten Lotkartusche gebildet werden. Diese Lotkartusche ist zur Zufuhr des Lotwerkstoffes über einen Zufuhrkanal mit der Kapillare verbunden. Diese Lotkartusche ist desweiteren gemäß Anspruch 14 auswechselbar ausgebildet, wodurch ebenfalls das Einsatzgebiet bzgl. der durchführbaren Lötaufgaben erheblich erweitert wird.

Gemäß Anspruch 15 kann im Bereich der Lötspitze eine Flußmittelkapillare vorgesehen sein, durch welche der Fügestelle Flußmittel aus einem Flußmitteldepot zugeführt werden kann. Die lichte Weite dieser Flußmittelkapillare ist dabei so gewählt, daß das Flußmittel durch die Kapillarwirkung durch die Flußmittelkapillare an eine entsprechende Ausgangsöffnung der Flußmittelkapillare gefördert wird und sich dort aufgrund der Oberflächenspannung des Flußmittels lediglich ein kleiner Flußmitteltropfen ausbildet. In diesem Zustand besteht zwischen der Oberflächenspannung und dem Kapillardruck innerhalb der Flußmittelkapillare hydrostatisches Gleichgewicht, so daß das Flußmittel nicht aus der Kapillare weiter austreten und unkontrolliert abtropfen kann. Erst wenn die Flußmittelkapillare mit ihrer Ausgangsöffnung bzw. mit dem Flußmitteltropfen mit einem anderen Gegenstand in Kontakt gebracht wird, wird die Oberflächenspannung aufgehoben, so daß das Flußmittel aufgrund der in der Flußmittelkapillare wirkenden Kapillarkräfte nachfließt.

Dazu ist gemäß Anspruch 16 vorgesehen, daß die Flußmittelkapillare aus einem wärmebeständigen Kapillarrohr besteht, das zum Zuführen von Flußmittel mit der Fügestelle und/oder mit der Lötspitze in Kontakt gebracht werden kann. Um die Flußmittelkapillare mit ihrer Ausgangsöffnung mit der Lötspitze in Kontakt bringen zu können, kann das Kapillarrohr beispielsweise im Bereich eines Griffteils des Einhand-Lötgerätes oder aber auch unter entsprechend thermischer Isolierung an der Lötspitze selbst schwenkbar gelagert sein, so daß sie mit ihrer Ausgangsöffnung auf die Lötspitze geschwenkt werden kann. Das Flußmittel tritt, sobald die Ausgangsöffnung bzw. der sich dort ausbildende Flußmitteltropfen mit der Lötspitze in Kontakt steht in einem kontinuierlichen Fluß aus der Flußmittelkapillare aus und fließt bei dieser Ausführungsform über die Lötspitze zur Fügestelle hin ab.

Für den Fall, daß die Lötspitze gemäß der Ansprüche 4 und 5 zweiteilig ausgebildet ist, kann auch eines der Spitzenteile auf die Ausgangsöffnung der Flußmittelkapillare zubewegt werden, so daß auch dadurch der Flußmitteltropfen mit der Lötspitze in Kontakt gebracht werden und ein Abfließen des Flußmittels zur Fügestelle über die Lötspitze bewirkt wird. Desgleichen gilt auch für die Ausgestaltung der Lötspitze als Lötfeder gemäß Anspruch 9, durch deren elastische Nachgiebigkeit ebenfalls ein Kontakt mit dem Flußmitteltropfen im Bereich der Ausgangsöffnung der Flußmittelkapillare hergestellt werden kann. In diesen beiden Fällen ist keine schwenkbare Lagerung der Flußmittelkapillare notwendig.

Gemäß Anspruch 17 kann die Flußmittelkapillare Bestandteil einer nach Art einer Schreibfeder eines Füllfederhalters ausgebildeten Flußmittelfeder sein. Bei dieser Ausführungsform ist vorgesehen, daß die Flußmittelkapillare als Flußmittelspalt ausgebildet ist. Durch diese Ausgestaltung wird eine äußerst einfache Herstellung der Flußmittelkapillare erreicht.

Gemäß Anspruch 18 kann das Flußmitteldepot austauschbar mit dem Lötgerät verbunden ist, so daß dessen "Nachfüllen" durch einfaches Ersetzten eines leeren Flußmitteldepots gegen ein neues, volles Flußmitteldepot in einfachster Weise erfolgt.

Gemäß Anspruch 19 kann in die Bohrung der Kapillare ein Lötkern eingesetzt und die Kapillare als Ringspalt ausgebildet sein. Durch diese Ausgestaltung ist ein gleichmäßigerer Lotfluß erreichbar.

Gemäß Anspruch 20 kann die Bohrungswand der Bohrung nicht mit Lotwerkstoff benetzbar und der Lötkern mit Lotwerkstoff benetzbar ausgebildet ist. Durch diese erfindungsgemäße Ausgestaltung wird eine erhebliche feinere Dosierbarkeit des Lotflusses erreicht.

Gemäß Anspruch 21 kann der Lötkern mit seinem äußeren Ende zumindest geringfügig aus der Bohrung herausragen und zu diesem Ende hin konisch verjüngt ausgebildet sein. Desweiteren ist gemäß Anspruch 21 vorgesehen, daß der Lötkern in einer axialen Ausgangslage den Ringspalt zur Kavität hin ventilartig verschließt und zum Öffnen des Ringspaltes axial gegen eine Federkraft in die Bohrung hinein axial verstellbar ist. Durch diese erfindungsgemäße Ausgestaltung wird eine optimale Dosierbarkeit des Lötmittelflusses zur Lötstelle erreicht, wobei der aus der Bohrung herausragende Teil des Lötkerns nach Art einer herkömmlichen Lötspitze einsetzbar ist, welchem durch eine entsprechende Axialverstellung des Lötkerns in der Bohrung bei Bedarf Lotwerkstoff zuführbar ist. Durch die konische Ausbildung des Lötkerns ist desweiteren der Lötmittelfluß im Ringspalt präzise steuerbar, wobei sich der die Kapillare bildende Ringspalt mit zunehmendem Stellweg des Lötkern vergrößert und somit auch mehr Lotwerkstoff je Zeiteinheit in einfachster Weise zuführbar ist.

Zusammenfassend ist somit festzustellen, daß das erfindungsgemäße Einhand-Lötgerät äußerst variabel für die unterschiedlichsten Lötaufgaben einsetzbar ist. Die erfindungsgemäß vorgesehene Lötspitze ist dabei geometrisch einfach aufgebaut und läßt sich an konventionellen Lötgeräten in einfachster Weise adaptieren. Es versteht sich, daß sich die einzelnen Merkmale der Unteransprüche in unterschiedlicher Weise miteinander kombinieren lassen, um eine möglichst optimale Ausbildung des erfindungsgemäßen Einhand-Lötgerätes für verschiedene Lötaufgaben zu erhalten.

Anhand der Zeichnung wird im folgenden die Erfindung näher erläutert. Es zeigt:
- Fig. 1: einen Teilschnitt durch eine erfindungsgemäße Lötspitze mit integriertem Lotdepot;
- Fig. 2: einen Schnitt II-II aus Fig. 1;
- Fig. 3: einen vergrößerten Ausschnitt III der Lötspitze aus Fig. 1;
- Fig. 3a: eine Frontansicht auf die Lotaustrittöffnung der Lötspitze aus Fig. 3;
- Fig. 4: ein zweites Ausführungsbeispiel des vorderen Endes der Lötspitze aus Fig. 1 in vergrößertem Maßstab;
- Fig. 4a: eine Frontansicht auf die Lotaustrittöffnung der Lötspitze aus Fig. 4;
- Fig. 5: ein drittes Ausführungsbeispiel des vorderen Endes einer Lötspitze gemäß Fig. 1 mit integriertem Kapillarröhrchen in vergrößertem Maßstab;
- Fig. 5a: eine Frontansicht auf die Lotaustrittöffnung der Lötspitze aus Fig. 5;
- Fig. 6: eine Lötspitze der erfindungsgemäßen Art mit einer Lötfeder als Lotzufuhreinrichtung;
- Fig. 7: eine vergrößerte Unteransicht VII des vorderen Endes der Lötfeder aus Fig. 6;
- Fig. 8: eine Draufsicht VIII der Lötspitze aus Fig. 6;
- Fig. 9: einen Teilschnitt durch eine zweiteilige Lötspitze mit integriertem Lotdepot;
- Fig. 10: eine Seitenansicht der Lötspitze aus Fig. 9;
- Fig. 11: eine vergrößerte Unteransicht XI des vorderen Endes der Lötspitze aus Fig. 10;
- Fig. 12: einen Teilschnitt XII-XII aus Fig. 9;
- Fig. 13: eine Schnittdarstellung einer Lötspitze mit separater, auswechselbar integrierter Lotkartusche.
- Fig. 14: einen Teilschnitt eines Lötkolbens mit der Lötspitze aus Fig. 1 und einer im Bereich der Lötspitze angeordneten Flußmittelkapillare;
- Fig. 15: einen vergrößerten Ausschnitt A aus Fig. 14;
- Fig. 16: eine Ansicht B der Flußmittelkapillare aus Fig. 15;
- Fig. 17: einen Schnitt eines weiteren Ausführungsbeispiels einer erfindungsgemäßen Lötspitze mit einem in der Zuführbohrung angeordneten Lötkern, welcher zusammen mit der Zuführbohrung als Kapillare einen Ringspalt bildet;
- Fig. 18: einen vergrößerten Ausschnitt C aus Fig. 17.

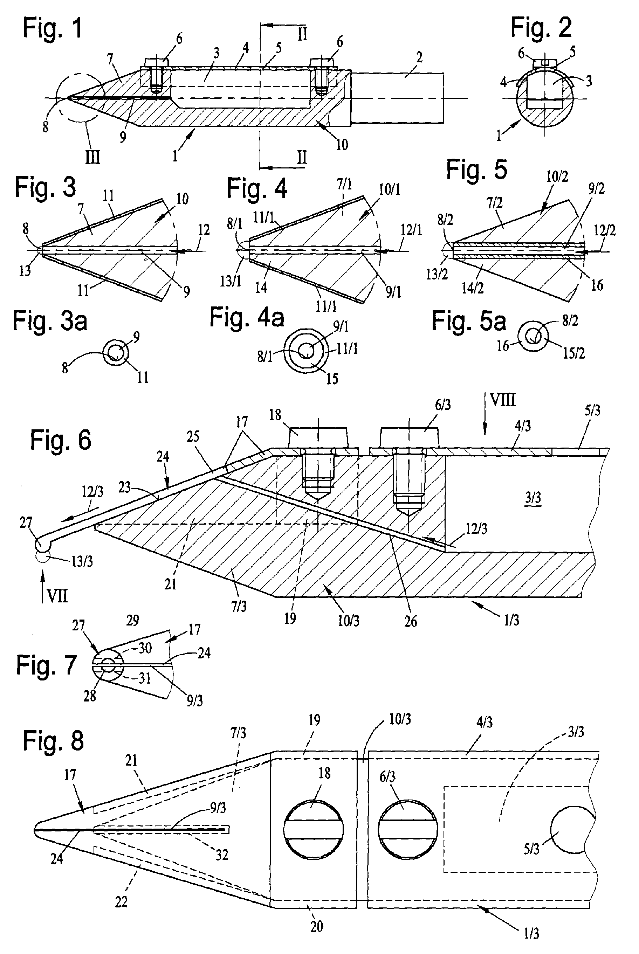

Fig. 1 zeigt eine erfindungsgemäße Lötspitze 1, welche an ihrem hinteren Endbereich einen Aufnahmeschaft 2 aufweist, mit welchem die Lötspitze 1 in eine Heizvorrichtung eines handelsüblichen Einhand-Lötgerätes einsteckbar ist. Über diesen Aufnahmeschaft 2 wird die gesamte Lötspitze 1 thermisch mit der Heizvorrichtung des Einhand-Lötgerätes gekoppelt und somit insgesamt auf eine erforderliche Löttemperatur zum Durchführen von entsprechenden Lötarbeiten gebracht.

Die Lötspitze 1 weist ein als Kaverne 3 ausgebildetes Lotdepot auf, welches in der Lötspitze 1 integriert angeordnet ist. Diese Kaverne 3 ist beim vorliegenden Ausführungsbeispiel nach oben hin offen ausgebildet. Zum Verschließen dieser Kaverne 3 ist ein der zylindrischen Außenkontur der Lötspitze 1 angepaßtes Verschlußblech 4 vorgesehen, das mit einer offenen Einfüllöffnung 5 versehen ist. Wie aus den Fig. 1 und 2 ersichtlich ist, ist das Verschlußblech 4 mittels zweier Schrauben 6 abnehmbar an der Lötspitze 1 befestigt. An ihrem dem Aufnahmeschaft 2 gegenüberliegenden Ende ist beim vorliegenden Ausführungsbeispiel der Fig. 1 die Lötspitze kegelförmig, spitz zulaufend ausgebildet und weist dementsprechend einen kegelförmigen Lötkegel 7 auf. Der Lötkegel 7 weist an seinem vorderen Ende eine Lotaustrittöffnung 8 einer Kapillare 9 auf.

Diese Kapillare 9 ist beim vorliegenden Ausführungsbeispiel als Bohrung mit geringem Querschnitt ausgebildet und verbindet das äußere Ende der Lötspitze 1 mit der Kaverne 3. Der Grundkörper 10 der Lötspitze 1 besteht beim Ausführungsbeispiel gemäß der Fig. 1 bis 3 aus einem mit Lotwerkstoff benetzbaren Werkstoff, wie beispielsweise einer Kupferlegierung, so daß auch die Kapillare 9 selbst auf ihrer gesamten Länge mit Lotwerkstoff benetzbar ist. Wie insbesondere aus Fig. 3 ersichtlich ist, weist der Grundkörper 10 an seiner Außenfläche insbesondere im Umgebungsbereich der Lotaustrittsöffnung 8 eine nicht mit Lotwerkstoff benetzbare Beschichtung 11 auf, die beispielsweise eine Chromlegierung sein kann. Diese Beschichtung 11 grenzt beim vorliegenden Ausführungsbeispiel unmittelbar an den Umfang der Lotaustrittsöffnung 8 der Kapillare 9 an, wie dies insbesondere durch die beiden Ringe unterhalb der Schnittdarstellung der Fig. 3a ersichtlich ist.

Durch diese spezielle Werkstoffwahl und somit der Oberflächeneigenschaften einerseits der Kapillare 9, welche mit Lotwerkstoff benetzbar ist, und andererseits der Oberflächenbeschichtung 11, welche nicht mit Lotwerkstoff benetzbar ist, wird im Betrieb aus der Kaverne 3 aufgrund der in der Kapillare 9 wirkenden Kapillarkräfte in Richtung des Pfeiles 12 Lotwerkstoff zur Lotaustrittsöffnung 8 gefördert. Ist der Lotwerkstoff an der Lotaustrittsöffnung 8 angelangt, so bildet dieser einen Lottropfen 13, wie dies beispielhaft in Fig. 3 in dünnen Linien dargestellt ist. Diese Tropfenbildung wird durch die in der Kapillare 9 wirkenden Kapillarkräfte bewirkt, so daß sich der Lottropfen 13 ständig vergrößert. Der Kapillartropfen 13 kann sich allerdings nicht auf die Umgebungsfläche bzw. auf den Umgebungsbereich der Lötspitze bzw. des Lötkegels 7 ausbreiten, da dieser mit der nicht mit Lotwerkstoff benetzbaren Beschichtung 11 versehen ist. Damit erreicht der Lottropfen 13 eine etwa kugelförmige Ausbildung, welche durch die bei Lotwerkstoffen übliche Oberflächenspannung bewirkt wird. Diese Oberflächenspannung des Lottropfens 13 bewirkt eine entgegen der Pfeilrichtung 12 wirkende Gegenkraft, welche mit zunehmender Größe des Lottropfens 13 ebenfalls größer wird. Bei einer bestimmten Größe des Lottropfens 13 entspricht diese Gegenkraft genau den Kapillarkräften, die in Richtung des Pfeiles 12 wirken, so daß zwischen der Kapillare und dem Lottropfen ein hydrostatisches Gleichgewicht bewirkt wird. Mit Erreichen dieses hydrostatischen Gleichgewichtes wird eine weitere Lotzufuhr durch die Kapillare 9 in Richtung des Pfeiles 12 gestoppt, so daß der Lottropfen 13 nicht weiter anwachsen kann. Die Größe der Kapillare 9 ist dabei derart bemessen, daß nur eine Größe des Lottropfens 13 erreichbar ist, die sicherstellt, daß der Lottropfen 13 sich nicht selbständig vom Lötkegel 7 lösen kann.

Zum Durchführen von Lötarbeiten wird der Lötkegel 7 der Lötspitze 1 mit einer zu verlötenden Fügestelle in Kontakt gebracht, so daß der Lottropfen 13 auf diese Fügestelle übergeht und gleichzeitig dessen Oberflächenspannung abgebaut wird. Aufgrund dieses Abbaus der Oberflächenspannung wird das hydrostatische Gleichgewicht der Gegenkraft des Lottropfens 13 und der Kapillarkräfte des in der Kapillare 9 befindlichen Lotwerkstoffes aufgehoben, so daß der Lotwerkstoff in der Kapillare wiederum beginnt, in Richtung des Pfeiles 12 nachzufließen. Ist die Fügestelle in gewünschter Art und Weise fertiggestellt, so wird die Lötspitze 1 mit ihrem Lotkegel 7 und damit auch mit der Lotaustrittsöffnung 8 von der Fügestelle abgenommen, so daß sich erneut ein Lottropfen 13 bis zum Erreichen eines erneuten hydrostatischen Gleichgewichtes bilden kann.

Es ist ersichtlich, daß durch die erfindungsgemäße Ausgestaltung, nämlich einerseits die benetzbare Ausbildung der Kapillare 9 sowie andererseits die nicht benetzbare Ausbildung des Umgebungsbereiches der Lotaustrittsöffnung, ein Nachtropfen nach Beendigung eines Lötvorganges der erfindungsgemäßen Lötspitze 1 sicher verhindert wird. Desweiteren wird erreicht, daß je nach Volumen der Kaverne 3 eine Vielzahl von Lötvorgängen durchgeführt werden können, ohne daß die Bedienungsperson eine externe Lotzufuhr zur Fügestelle bewerkstelligen muß. Damit ist das erfindungsgemäße Einhand-Lötgerät, welches mit der erfindungsgemäßen Lötspitze 1 versehen ist, in einfacher Weise mit einer Hand bedienbar, so daß die entsprechende Bedienungsperson die andere Hand beispielsweise zum Fixieren der zusammenzufügenden Bauteile nutzen kann.

Fig. 4 zeigt ein zweites Ausführungsbeispiel eines Lotkegels 7/1, welcher sich durch seine Ausgestaltung an seinem vorderen Ende 14 vom Lötkegel 7 des Ausführungsbeispieles gemäß der Fig. 1 bis 3 unterscheidet. Wie insbesondere in der durch die drei Kreisringe dargestellten Frontansicht der Fig. 4a ersichtlich ist, ist im unmittelbaren Umgebungsbereich der Kapillare 9/1 des Lötkegels 7/1 eine Ringfläche 15 vorgesehen, welche aus demselben Material besteht, wie der Grundkörper 10/1 bzw. der Lötkegel 7/1 dieses zweiten Ausführungsbeispieles. Durch diese Ringfläche 15 kann sich am vorderen Ende 14 des Lötkegels 7/1 ein größerer Lottropfen 13/1 ausbilden, so daß für einen Lötvorgang mehr Lotwerkstoff beim ersten Inkontaktbringen mit einer Fügestelle zur Verfügung steht. Die prinzipielle Funktionsweise dieses Ausführungsbeispieles ist identisch mit der Funktionsweise des Ausführungsbeispieles der Fig. 1 bis 3. Auch beim zweiten Ausführungsbeispiel der Fig. 4 führt die Kapillare 9/1 zu einer Lotaustrittsöffnung 8/1 des Lötkegels 7/1, wo sich der bereits erwähnte Lottropfen 13/1 ausbildet. Da sich dieser Lottropfen 13/1 auf der Ringfläche 15 ausbreiten kann, ist mehr Lotwerkstoff erforderlich, um die notwendige Oberflächenspannung des Lottropfens 13/1 aufbauen zu können, welche bei entsprechender Größe des Lottropfens 13/1 eine Gegenkraft zur Kapillarkraft bewirkt, welche durch den in der Kapillare 9/1 befindlichen Lotwerkstoff in Richtung des Pfeiles 12/1 hervorgerufen wird. Auch hier stellt sich bei entsprechender Größe des Lottropfens 13/1 ein hydrostatisches Gleichgewicht der Gegenkraft zur Kapillarkraft ein, so daß eine weitere Vergrößerung des Lottropfens 13/1 verhindert wird.

Auch dieser Lottropfen 13/1 ist in seiner Größe derart dimensioniert, daß er sich nicht selbständig von der Ringfläche 15 bzw. dem Lötkegel 7/1 lösen kann. Wie aus Fig. 4 weiter ersichtlich ist, wird die Ringfläche 15 durch eine, zumindest im Bereich der Außenfläche des Lötkegels 7/1 vorgesehene, nicht mit Lotwerkstoff benetzbare Beschichtung 11/1 begrenzt, so daß ein Ausbreiten des Lottropfens 13/1 auf den Lötkegel 7/1 wirksam verhindert wird und somit ein unkontrolliertes Nachströmen und damit ein Ablösen des Lottropfens 13/1 sicher verhindert wird.

Fig. 5 zeigt ein Ausführungsbeispiel eines Lötkegels 7/2, dessen Grundkörper 10/2 aus einem nicht mit Lotwerkstoff benetzbaren Werkstoff gebildet wird. Die Kapillare 9/2 des Lötkegels 7/2 wird bei diesem Ausführungsbeispiel durch ein Kapillarröhrchen 16 gebildet, dessen vordere Stirnfläche am vorderen Ende 14/2 des Lötkegels 7/2 eine Ringfläche 15/2 bildet, wie dies durch die beiden Kreisringe aus Fig. 5a ersichtlich ist. Diese Kreisringfläche 15/2 entspricht im wesentlichen der Kreisringfläche 15 des Ausführungsbeispieles aus Fig. 4 und bildet den unmittelbaren Umgebungsbereich der Lotaustrittsöffnung 8/2 des Lötkegels 7/2. Auch hier ist die grundsätzliche Funktionsweise identisch mit den vorangegangenen Ausführungsbeispielen, so daß sich auch beim Ausführungsbeispiel der Fig. 5 ein Lottropfen 13/2 mit definierter Größe ausbildet. Das Ausführungsbeispiel gemäß der Fig. 5 hat den Vorteil, daß die Oberfläche der gesamten Lötspitze oder zumindest im Bereich des Lötkegels 7/2 nicht mit einer nicht mit Lotwerkstoff benetzbaren Beschichtung versehen werden muß, so daß die Kosten äußerst gering gehalten werden können. Das Kapillarröhrchen 16 selbst besteht hingegen aus einem mit Lotwerkstoff benetzbaren Material, so daß sich die gleichen Wirkungsweisen wie bei den vorangegangen beschriebenen Ausführungsbeispielen ergeben.

Fig. 6 zeigt einen Teilschnitt eines weiteren Ausführungsbeispieles einer Lötspitze 1/3, welche einen Grundkörper 10/3 aufweist, der aus einem mit Lotwerkstoff benetzbaren Werkstoff gebildet ist. In dieser Lötspitze 1/3 bzw. im Grundkörper 10/3 ist ebenfalls als Lotdepot eine Kaverne 3/3 vorgesehen, deren Ausbildung ähnlich ist, wie die Kaverne 3 aus dem Ausführungsbeispiel nach Fig. 1. Diese Kaverne 3/3 ist ebenfalls durch ein, an die Außenkontur des Grundkörpers 10/3 formangepaßtes Verschlußblech 4/3 verschlossen. Dieses Verschlußblech 4/3 ist ebenfalls über entsprechende Schrauben 6/3 mit dem Grundkörper 10/3 verbunden und verschließt die Kaverne 3/3 vollständig. Auch das Verschlußblech 4/3 weist eine entsprechende Einfüllöffnung 5/3 auf, über welche in die Kaverne 3/3 Lotwerkstoff eingebracht werden kann.

Im vorderen Endbereich des Grundkörpers 10/3 ist eine Lötfeder 17 vorgesehen, deren spezielle Ausgestaltung etwa der Ausgestaltung einer Schreibfeder eines Füllfederhalters entspricht. Diese Lötfeder 17 ist mittels einer Montageschraube 18 auswechselbar am Grundkörper 10/3 befestigt. Zur passenden Führung der Lötfeder 17 weist diese zwei Seitenwände 19 und 20 auf, welche insbesondere im Bereich der Montageschraube 18 am Grundkörper 10/3 passend anliegen, wie dies insbesondere aus Fig. 8 ersichtlich ist. Die beiden vorderen Endbereiche 21 und 22 dieser beiden Seitenwände 19 und 20 können dabei divergierend zum in Fig. 8 gestrichelt dargestellten Lötkegel 7/3 verlaufen und dienen dementsprechend lediglich zu vertikalen Stabilisierung der Lötfeder 17.

Durch diese spezielle Ausgestaltung der Lötfeder 17 liegt diese auf einer ebenen Oberfläche 23 des Lötkegels 7/3 plan auf. Wie aus den Fig. 6 und 8 weiter ersichtlich ist, weist die Lötfeder 17 einen sich bis zum vorderen Ende erstreckenden Lotspalt 24 auf, welcher sich zumindest annähernd bis zum hinteren Ende der ebenen Oberfläche 23 des Lötkegels 7/3 erstreckt. Im hinteren Endbereich 25 ist im Grundkörper 10/3 von der ebenen Oberfläche 23 ausgehend ein Zufuhrkanal 26 vorgesehen, durch den eine das Lotdepot bildende Kaverne 3/3 mit der planebenen Oberfläche 23 verbunden ist.

Im Betrieb gelangt nun aus der Kaverne 3/3 durch den Zufuhrkanal 26 Lotwerkstoff in Richtung des Pfeils 12/3 zum Lotspalt 24 der Lötfeder 17 und wird dort aufgrund der wirkenden Kapillarkräfte im Lotspalt 24 bis zu einer am äußeren Ende der Lötfeder 17 vorgesehenen Lötkugel 27 gefördert, wie dies durch den weiteren Pfeil 12/3 angedeutet ist.

Dabei besteht die Lötfeder 17 beim vorliegenden Ausführungsbeispiel aus einem mit Lotwerkstoff benetzbaren Grundwerkstoff, welcher auf seiner gesamten Oberfläche mit einer nicht mit Lotwerkstoff benetzbaren Beschichtung versehen ist. Durch nachträgliches Anbringen des Lotspaltes 24 in der in den Fig. 6 und 8 dargestellten Art und Weise wird somit erreicht, daß die beiden einander zugewandten Innenflächen des Lotspaltes ebenfalls mit Lotwerkstoff benetzbar sind, da sich dort keine derartige Beschichtung befindet. Somit bildet der Lotspalt 24 bei diesem Ausführungsbeispiel eine entsprechende Kapillare 9/3, in welcher die zu den Fig. 1 bis 5 bereits angesprochenen Kapillarkräfte wirksam sind. Dabei bildet sich bei diesem Ausführungsbeispiel beispielsweise an der Unterseite der Lötkugel 27, wie dies in Fig. 6 dargestellt ist, ein Lottropfen 13/3 aus, der insbesondere vom Querschnitt der Kapillare 9/3 bzw. des Lotspaltes 24 abhängig ist.

Desweiteren kann die Größe dieses Lottropfens 13/3 auch durch eine spezielle Ausgestaltung der Unterseite der Lötkugel 27 beeinflußt werden. So kann diese, wie dies insbesondere aus der vergrößerten Darstellung der Fig. 7 ersichtlich ist, im Bereich des Lötspaltes 24 einen benetzbaren, beim vorliegenden Ausführungsbeispiel kreisrunden Bereich 28 aufweisen, welcher durch die diesen Bereich 28 umgebende Beschichtung 29, welche nicht benetzbar ist, umschließend begrenzt wird. Dieser benetzbare Bereich 28 muß nicht zwingend direkt unterhalb an der Lötkugel 27 vorgesehen sein. Die Anordnung kann auch im vorderen Spitzenbereich zum Ende hin verschoben sein. Auch ist die kreisrunde Form dieses benetzbaren Bereiches 28 nicht zwingend. Es kann auch vorgesehen sein, daß beispielsweise die benachbarten Bereiche des Lotspaltes 24 mit einem mehr oder weniger breiten Streifen versehen sind, wie dies beispielhaft durch die beiden gestrichelten Linien 30 und 31 dargestellt ist, so daß sich der in Fig. 6 dargestellte Lottropfen 13/3 in unterschiedlicher Form und Größe ausbilden kann. Auch ist die Gesamtfläche des benetzbaren Bereiches 28 variabel gestaltbar, so daß unterschiedliche Lötfedern 17 mit unterschiedlichen Lötkugeln 27 sowie unterschiedlichen, benetzbaren Bereichen 28 vorgesehen werden können.

Beim vorliegenden Ausführungsbeispiel ist die Lötfeder 17 über die Montageschraube 18 am Grundkörper 10/3 befestigt. Es sind dabei auch andere Befestigungsarten, wie beispielsweise Rastverbindungen und dgl. vorgesehen, wodurch die Handhabbarkeit, insbesondere zum Austauschen unterschiedlicher Lötfedern 17, vereinfacht wird.

Desweiteren kann auch vorgesehen sein, daß die Lötfeder 17 unterseitig, insbesondere im Bereich ihres Lotspaltes 24 im Bereich ihrer Auflage auf der ebenen Oberfläche 23, einen benetzbaren Umgebungsbereich aufweist, wie dies insbesondere aus Fig. 8 in gestrichelten Linien 32 dargestellt ist. Durch eine derartige Ausgestaltung eines benetzbaren Bereiches um den eigentlichen Lotspalt 24 herum wird auch eine Kapillarwirkung zwischen der Lötfeder 17 und dem Lötkegel 7/1 im unmittelbaren Umgebungsbereich des Lotspaltes 24 erreicht. Dadurch kann pro Zeiteinheit eine größere Menge Lotwerkstoff einer Fügestelle während des Lötvorganges zugeführt werden. Dabei kann auch vorgesehen sein, daß die Lötfeder 17 elastisch nachgiebig, insbesondere im Bereich ihres Lötspaltes 24, ausgebildet ist, so daß durch entsprechendes Andrücken während des Lötvorganges der Lötkugel 27 auf die Fügestelle die Lötfeder 17 leicht vom Lötkegel 7/3 abgehoben wird, wodurch der Kapillarspalt im Bereich des Lötspaltes 24 zwischen der Lötfeder 17 und dem Lötkegel 7/3 zumindest bereichsweise vergrößert wird. Dadurch wird der Zufluß von Lotwerkstoff vergrößert und somit eine Beschleunigung der Herstellung einer Fügestelle erreicht.

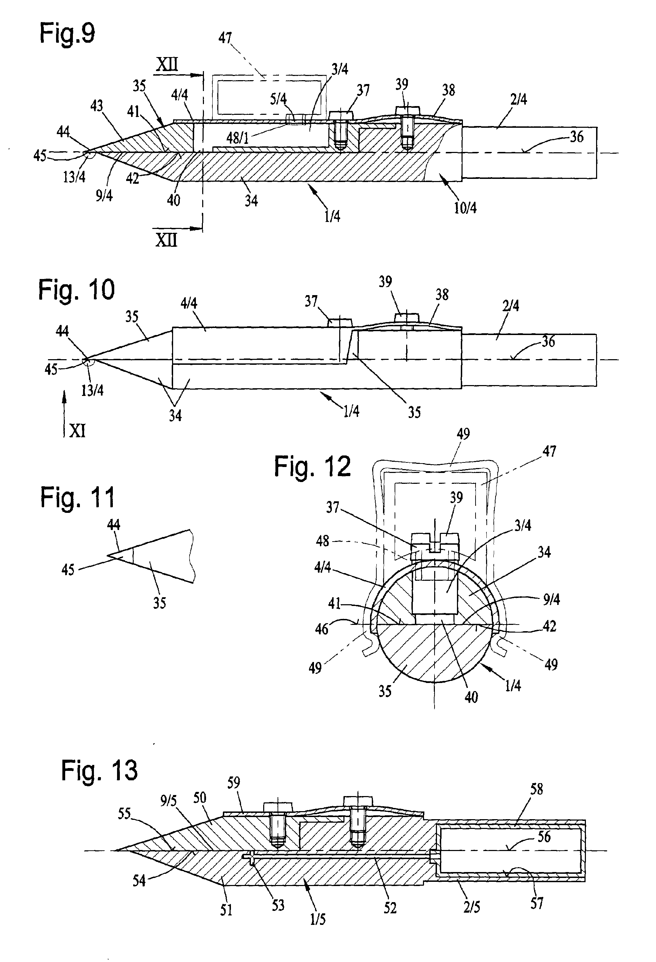

Fig. 9 zeigt ein weiteres Ausführungsbeispiel 1/4 einer für ein Einhand-Lötgerät vorgesehenen Lötspitze. Diese Lötspitze 1/4 besteht aus einem, einen Grundkörper 10/4 bildenden unteren Spitzenteil 34, auf welches ein zweites, oberes Spitzenteil 35 aufgesetzt ist. Wie aus Fig. 12 ersichtlich ist, bilden diese beiden Spitzenteile 34 und 35 eine im wesentlichen zylindrische Außenform. Das obere Spitzenteil 35 ist mit einer Kaverne 3/4 versehen, welche zur Aufnahme von Lotwerkstoff dient und dementsprechend das Lotdepot dieser Ausführungsform der Lötspitze 1/4 bildet. Die Kaverne 3/4 ist durch ein der Außenform der Lötspitze 1/4 angepaßtes Verschlußblech 4/4 abgedeckt, das zum Befüllen der Kaverne 3/4 eine entsprechende Einfüllöffnung 5/4 aufweist.

Wie aus Fig. 9 bzw. 12 ersichtlich ist, liegt die Trennebene 46 zwischen den beiden Spitzenteilen 34 und 35 etwa im Bereich der Längsmittelachse 36 der Lötspitze 1/4. Das Verschlußblech 4/4 ist mittels einer Befestigungsschraube 37 festsitzend am oberen Spitzenteil 35 montiert. Wie aus Fig. 9 weiter ersichtlich ist, weist das Verschlußblech 4/4 zum Aufnahmeschaft 2/4 der Lötspitze 1/4 ein als Blattfeder ausgebildetes Federelement 38 auf, durch welches das obere Spitzenteil 35 federelastisch gegen das untere Spitzenteil 34 gedrückt wird.

Das Federelement 38 ist mit einer Vorspannschraube 39 am ersten Spitzenteil 34 oberseitig befestigt. Diese Vorspannschraube 39 dient einerseits zum festsitzenden Halt des Federelementes 38 zusammen mit dem Verschlußblech 4/4 und dem oberen Spitzenteil 35 auf dem unteren Spitzenteil 34 und andererseits zur Einstellung der Anpreßkraft, mit welcher das obere Spitzenteil 35 auf das untere Spitzenteil 34 gedrückt wird. Wie aus Fig. 9 weiter ersichtlich ist, weist die Kaverne 3/4 eine Auslaßöffnung 40 auf, durch die Lotwerkstoff auf die obere Kontaktfläche 41 des unteren Spitzenteils 34 gelangt. Auf dieser oberen Kontaktfläche 41 des unteren Spitzenteils 34 liegt die untere Kontaktfläche 42 an das obere Spitzenteil 35 eben auf. Bei diesem Ausführungsbeispiel gemäß der Fig. 9 bilden somit die beiden Kontaktflächen 41 und 42 der beiden Spitzenteile 34 und 35 die Kapillare 9/4, durch welche im erwärmten Zustand Lotwerkstoff zum vorderen Ende 43 der Lötspitze 1/4 gelangt.

Wie aus Fig. 9 und Fig. 10 weiter ersichtlich ist, überragt das obere Spitzenteil 35 mit seinem vorderen Ende 43 das untere Spitzenteil 34. Die beiden Kontaktflächen 41 und 42 der beiden Spitzenteile 34 und 35 sind mit Lotwerkstoff benetzbar, so daß sich zwischen diesen Kontaktflächen 41 und 42 ein Kapillardruck einstellt, durch welchen Lotwerkstoff durch die von diesen beiden Kontaktflächen 41 und 42 gebildete Kapillare 9/4 zum vorderen Ende 43 der Lötspitze 1/4 gefördert wird.

Da der überstehende Abschnitt 44 des oberen Spitzenteils 35 ebenfalls mit Lotwerkstoff benetzbar ist, bildet sich an diesem ein Lottropfen 13/4 aus, dessen Größe im wesentlichen von der Größe der Aufnahmefläche 45 des überstehenden Teils 44 sowie von der Gestaltung der spaltartigen Kapillaren zwischen den Kontaktflächen 41 und 42, wie bereits zu den vorangegangenen Ausführungsbeispielen beschrieben, abhängig ist. Die Größe dieser Lotaufnahmefläche 45 kann dabei bis zu 2,5 mm² betragen, ohne daß der sich ausbildende Lottropfen 13/4 von der Lotaufnahmefläche 45 abreißt.

Bei einer vorbestimmbaren Größe des Lottropfens 13/4 wird durch die Oberflächenspannung des Lottropfens 13/4 eine Gegenkraft zur Kapillarkraft in der Kapillare 9/4 zwischen den beiden Kontaktflächen 41 und 42 bewirkt, welche mit der Kapillarkraft in einem hydrostatischen Gleichgewicht steht. Dies wird dadurch erreicht, daß die Oberfläche der beiden Spitzenteile 34 und 35 mit einem nicht mit Lotwerkstoff benetzbaren Werkstoff beschichtet ist, so daß sich der Lottropfen 13/4 nicht über die Lotaufnahmefläche 45 hinaus ausbreiten kann und dementsprechend die erforderliche Oberflächenspannung zum Erzeugen der Gegenkraft aufgebaut wird.

Desweiteren ist bzgl. des Ausführungsbeispieles der Lötspitze 1/4 gemäß der Fig. 9 auch vorgesehen, das obere Spitzenteil 35 relativ zum unteren Spitzenteil 34 verschiebbar auszubilden, so daß die Größe der Lotaufnahmefläche 45 des vorderen, überstehenden Abschnittes 44 des oberen Spitzenteils 35 variabel eingestellt werden kann. Durch diese Einstellungsmöglichkeit ist ebenfalls die Größe des sich ausbildenden Lottropfens 13/4 in einfacher Weise einstellbar, so daß auch die Lötspitze 1/4 unterschiedlichen Anforderungen für unterschiedliche Lötaufgaben in einfacher Weise angepaßt werden kann.

Durch die federbelastete Montage des oberen Spitzenteils 35 auf dem unteren Spitzenteil 34 kann während des Lötvorganges durch leichten Druck von unten auf den vorderen, überstehende Abschnitt 44 des oberen Spitzenteils 35 dieses gegen den Federdruck mit seiner Kontaktfläche 42 von der Kontaktfläche 41 des unteren Spitzenteils 34 leicht abgehoben werden, was zu einer Vergrößerung des Querschnittes der Kapillare 9/4 führt. Durch diese Vergrößerung des Querschnittes der Kapillare 9/4 wird eine erhöhte Lotwerkstoffzufuhr während eines Lötvorganges erreicht, so daß ein Lötvorgang erheblich beschleunigt werden kann.

Wie aus Fig. 12 ersichtlich ist, erstreckt sich das Verschlußblech 4/4 bogenförmig nach unten über die durch die beiden Kontaktflächen 41 und 42 definierte Trennebene 46 zwischen den beiden Spitzenteilen 34 und 35, so daß aufgrund der nichtbenetzbaren Oberfläche und aufgrund der Abdeckung der durch die Kontaktflächen 41 und 42 gebildeten Kapillare ein versehentliches Austreten von Lotwerkstoff in seitlicher Richtung sicher verhindert wird. Es sei hier bemerkt, daß eine solche seitliche Abdeckung der Kapillare 9/4 nicht zwingend notwendig ist.

Wie aus den Fig. 9 und 12 weiter beispielhaft in Phantomlinien dargestellt ist, kann auf die Kaverne 3/4 bzw. auf das Verschlußblech 4/4 der Kaverne 3/4 eine Lotpatrone 47 aufgesetzt sein, die mit ihrem Bodenteil 48 zumindest bereichsweise flächig auf dem Verschlußblech 4/4 aufliegt. Durch diese flächige Auflage der Lotpatrone 47 auf dem Verschlußblech 4/4 wird eine optimale thermische Kopplung zwischen der Lötspitze 1/4 und der Lotpatrone 47 erreicht, so daß darin enthaltener Lotwerkstoff sicher während des Betriebes aufgeschmolzen werden kann. Die Lotpatrone 47 weist unterseitig zur Kaverne 3/4 hin einen Einfüllstutzen 49 auf, durch welchen bei Bedarf Lotwerkstoff aus der Lotpatrone 47 in die Kaverne 3/4 während des Betriebes gelangt. Durch den Einsatz dieser Lotpatrone 47 kann die Anzahl der herzustellenden Lötverbindungen erheblich vergrößert werden. Wie insbesondere aus Fig. 12 ersichtlich ist, kann die Lotpatrone 47 in einfacher Weise auswechselbar über eine federelastische Halteklammer 49 am Verschlußblech 4/4 und somit an der Lötspitze 1/4 gehalten sein.

Fig. 13 zeigt ein weiteres Ausführungsbeispiel einer Lötspitze 1/5, welche ebenfalls aus einem oberen Spitzenteil 50 und einem unteren Spitzenteil 51 besteht. Der wesentliche Unterschied zum Ausführungsbeispiel gemäß Fig. 9 besteht darin, daß diese Lötspitze 1/5 keine Kaverne 3/4 aufweist, sondern daß die Zufuhr von Lotwerkstoff über entsprechende Zufuhrkanäle 52 und 53 in die von den beiden Kontaktflächen 54 und 55 der beiden Spitzenteile 50 und 51 gebildete Kapillare 9/5 erfolgt. Der etwa parallel zur Längsmittelachse 56 der Lötspitze 1/5 verlaufende Zufuhrkanal 52 mündet in einen Hohlraum 57 des Aufnahmeschaftes 2/5 der Lötspitze 1/5. In diesen Hohlraum 57 des Aufnahmeschaftes 2/5 ist eine Lotkartusche 58 auswechselbar eingesetzt. Durch den Einsatz dieser Lotkartusche 58 liegt diese beim vorliegenden Ausführungsbeispiel im Bereich des Aufnahmeschaftes 2/5, welcher im montierten Zustand z.B. in das Heizelement eines Einhand-Lötgerätes (in der Zeichnung nicht dargestellt) eingesetzt ist. Damit wird sichergestellt, daß der in der Lotkartusche 58 befindliche Lotwerkstoff im Betrieb sicher aufgeschmolzen wird und entlang der beiden Zuführkanäle 52 und 53 sicher in die Kapillare 9/5 gefördert wird.

Auch das obere Spitzenteil 50 der Lötspitze 1/5 ist federelastisch über ein entsprechendes Halteelement 59 auf dem unteren Spitzenteil 51 gehalten. Die Materialbeschaffenheit der beiden Kontaktflächen 54 und 55 entspricht der Materialbeschaffenheit der beiden Kontaktflächen 41 und 42 des Ausführungsbeispieles aus Fig. 9. Desgleichen gilt für die Oberflächen der beiden Spitzenteile 50 und 51, welche dementsprechend ebenfalls mit einem nicht mit Lotwerkstoff benetzbaren Werkstoff beschichtet sind.

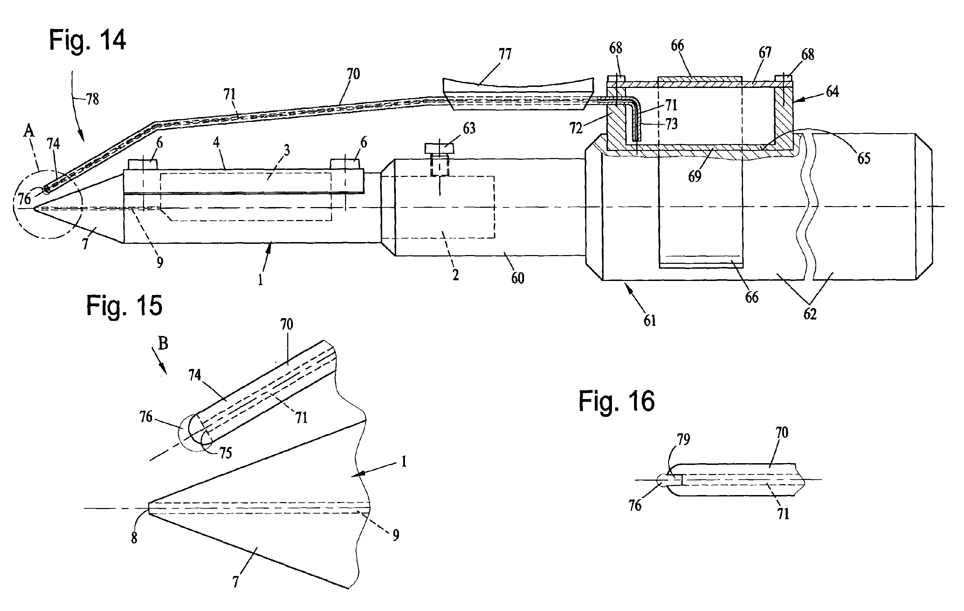

Fig. 14 zeigt die Lötspitze 1 aus Fig. 1 in montiertem Zustand an einer Heizvorrichtung 60, welche Bestandteil eines Lötkolbens 61 ist. Der Lötkolben 61 weist rückwärtig ein Griffteil 62 auf, welches zur manuellen Handhabung des Lötkolbens 61 dient und in welches die Heizvorrichtung 60 festsitzend eingesetzt ist. Die mit ihrem Aufnahmeabschnitt 2 in die Heizvorrichtung 60 eingesetzte Lötspitze 1 wird in diesem montierten Zustand mittels einer Klemmschraube 63 auswechselbar gehalten, wie dies bereits aus dem Stand der Technik bekannt ist. Fig. 14 zeigt die Lötspitze 1 zusammen mit dem Lötkolben 61 im fertigen Betriebszustand, wobei in Fig. 14 in gestrichelten Linien die Kaverne 3 und die von der Kaverne zum vorderen Ende der Lötspitze 1 führende Kapillare 9 erkennbar ist. Die Kaverne 3 ist in diesem Betriebszustand, wie bereits zu Fig. 1 erwähnt, durch das Verschlußblech 4 verschlossen, welches mittels der Befestigungsschrauben 6 an der Lötspitze 1 lösbar montiert ist.

Wie aus Fig. 14 weiter ersichtlich ist, ist am Griffteil 62 ein Flußmitteldepot in Form eines Flußmittelbehälters 64 befestigt. Zur Aufnahme dieses Flußmittelbehälters 64 in einer definierten Lage weist das Griffteil 62 oberseitig eine entsprechende Ausnehmung 65 auf, in welche der Flußmittelbehälter 64 passend einsetzbar ist. Zur auswechselbaren Befestigung des Flußmittelbehälters 64 am Griffteil 62 ist eine federelastische Halteklammer 66 vorgesehen, deren Formgebung etwa der Halteklammer 49 des Ausführungsbeispieles aus Fig. 12 entspricht. Durch die Halteklammer 66 wird somit der Flußmittelbehälter 64 abnehmbar am Griffteil 62 gehalten, wobei das Griffteil 62 eine etwa zylindrische Querschnittsform aufweisen kann.

Wie aus Fig. 14 weiter ersichtlich ist, ist der Flußmittelbehälter 64 mittels einer Abdeckplatte 67 verschlossen, welche mittels mehrerer Schrauben 68 mit dem eigentlichen Grundgehäuse 69 des Flußmittelbehälters 64 lösbar verbunden ist. Der Flußmittelbehälter 64 dient zur Aufnahme von flüssigem Flußmittel, welches der Fügestelle zuführbar ist.

Zum Zuführen des im Flußmittelbehälter 64 bevorrateten Flußmittels dient ein Kapillarrohr 70, welches beim vorliegenden Ausführungsbeispiel eine kanalartige Flußmittelkapillare 71 bildet. Das Kapillarrohr 70 durchragt die vordere Behälterwand 72 des Flußmittelbehälters 64 und ist beim vorliegenden Ausführungsbeispiel in dieser Behälterwand 72 festsitzend aufgenommen. Im Aufnahmebereich des Flußmittelbehälters 64 weist das Kapillarrohr 70 einen etwa rechtwinklig zum Griffteil 62 hin abgebogenen Saugstutzen 73 auf, welcher im Betrieb in das im Flußmittelbehälter 64 bevorratete Flußmittel eintaucht. Aufgrund der Kapillarwirkung der somit bis in das Flußmittel reichenden Flußmittelkapillare 71, welche sich im Saugstutzen 73 fortsetzt, wird im Betrieb Flußmittel aus dem Flußmittelbehälter 64 bis zum vorderen Ende 74 des Kapillarrohres 70 gefördert. Dort bildet sich, wie insbesondere aus Fig. 15 ersichtlich ist, im Bereich der Austrittsöffnung 75 der Flußmittelkapillare 71 am Ende 74 des Kapillarrohres 70 ein Flußmitteltropfen 76 aus. Dieser Flußmitteltropfen 76 kann aufgrund der Oberflächenspannung des Flußmittels nur eine, durch die Querschnittsfläche sowie die Größe der Austrittsöffnung 75 bzw. der Flußmittelkapillare 71 bestimmte Größe annehmen. Bei dieser vorbestimmten Größe des Flußmitteltropfens 76 stellt sich ein hydrostatisches Gleichgewicht zwischen der Oberflächenspannung des Flußmitteltropfens 76 und den in der Flußmittelkapillare 71 wirkenden Kapillarkräfte ein, so daß ein weiteres Nachfließen von Flußmittel verhindert wird.

Wie aus Fig. 14 weiter ersichtlich ist, ist im Bereich des Flußmittelbehälters 64 das Kapillarrohr 70 mit einer flächigen Druckplatte 77 versehen, über welche das vordere Ende 74 in Richtung des Pfeiles 78 niedergedrückt und mit dem Lötkegel 7 der Lötspitze 1 in Kontakt gebracht werden kann. Dazu wird das Kapillarrohr 70 vorzugsweise aus einem federelastischen metallischen Werkstoff gebildet. Wird nun das vordere Ende 74 des Kapillarrohres 70 mit dem Lötkegel 7 in Kontakt gebracht, so fließt der Flußmitteltropfen 76, welcher ebenfalls mit dem Lötkegel 7 in Kontakt kommt, zum vorderen Ende in den Bereich der Lotaustrittsöffnung des Lötkegels 7 ab. Durch dieses Abfließen des Flußmitteltropfens 76 verringert sich dessen Oberflächenspannung, so daß aufgrund des in der Flußmittelkapillare 71 wirkenden Kapillardruckes so lange Flußmittel durch die Flußmittelkapillare bzw. das Kapillarrohr 70 aus dem Flußmittelbehälter 64 zum vorderen Ende 74 des Kapillarrohres 70 gefördert wird, solange dieses vordere Ende 74 mit dem Lötkegel 7 der Lötspitze 1 in Kontakt steht. Wird nun die Druckplatte 77 wieder entlastet, so nimmt das vordere Ende 74 des Kapillarrohres 70 aufgrund der federelastischen Eigenschaften des Kapillarrohres 70 wieder den in Fig. 14 bzw. 15 dargestellten Abstand zum Lötkegel 7 ein, so daß sich erneut ein Flußmitteltropfen 76 am vorderen Ende 74 des Kapillarrohres 70 ausbildet.

Um nun auch eine Flußmittelzufuhr direkt an eine Fügestelle erreichen zu können, weist das vordere Ende 74 des Kapillarrohres 70 eine besondere Formgebung auf. Aus Fig. 16, welche eine Draufsicht **B** aus Fig. 15 darstellt, ist erkennbar, daß das Ende 74 des Kapillarrohres 70 etwa halbkugelförmig ausgebildet ist und im Endbereich einen Zuführschlitz 79 aufweist. Aufgrund dieses Zuführschlitzes 79 erfährt der Flußmitteltropfen 76 eine bestimmte Verteilung am Ende des Kapillarrohres 70, wie dies aus den Fig. 15 und 16 ersichtlich ist. Insbesondere aus Fig. 15 ist erkennbar, daß sich der Flußmitteltropfen 76 aufgrund des Zuführschlitzes 79 auch in Richtung der dem Lötkegel 7 gegenüberliegenden Seite des vorderen Endes 74 des Kapillarrohres 70 ausbildet. Somit ist es in einfacher Weise möglich, das vordere Ende 74 des Kapillarrohres 70 mit dem sich derart ausbildenden Löttropfen 76 direkt mit einer Fügestelle in Berührung zu bringen. Auch in diesem Falle fließt der Flußmitteltropfen 76 auf die Fügestelle ab, so daß ebenfalls die Oberflächenspannung des Flußmitteltropfens 76 verringert wird und aufgrund des im Kapillarrohr 70 bzw. in der Flußmittelkapillare 71 wirkenden Kapillardruckes Flußmittel aus dem Flußmittelbehälter 64 so lange nachströmt, wie der Kontakt zwischen dem vorderen Ende 74 des Kapillarrohres 70 und der Fügestelle besteht.

Es ist ersichtlich, daß durch das vorgesehene Kapillarrohr 70 aus dem Flußmittelbehälter 64 in einfachster Weise Flußmittel dosiert entweder direkt der Lötspitze 1 bzw. dem Lötkegel 7 der Lötspitze 1 oder einer Fügestelle zugeführt werden kann. Aufgrund der lösbaren Befestigung des Flußmittelbehälters 64 am Griffteil 62 des Lötkolbens 61 ist der Flußmittelbehälter 64 in einfachster Weise austauschbar und kann, nachdem der Flußmittelvorrat erschöpft ist, durch einen neuen Flußmittelbehälter ersetzt werden.

Desweiteren ist auch vorgesehen, daß in den Flußmittelbehälter 64 eine Flußmittelkartusche oder dgl. auswechselbar eingesetzt ist, aus welcher das Flußmittel dem Kapillarrohr 70 zugeführt wird (in der Zeichnung nicht dargestellt). Die Ausgestaltung kann dabei etwa der Ausgestaltung der Lotkartusche 58 entsprechen, wie oben zu Fig. 13 beschrieben.

Es sind auch noch weitere Konstruktionen insbesondere der Flußmittelkapillare 71 vorgesehen. So kann die Flußmittelkapillare auch nach Art einer Flußmittelfeder ausgebildet sein, wie dies bereits für die Lötfeder 17 aus den Fig. 6 bis 8 beschrieben wurde.

Desweiteren kann die Flußmittelkapillare 71 bzw. das Kapillarrohr 70 auch im Bereich der Lötspitze 1 schwenkbar gelagert sein. In diesem Falle ist allerdings vorzugsweise eine thermische Isolierung zwischen dem Flußmittelbehälter bzw. der Flußmittelkapillare und der Lötspitze 1 vorzusehen.

Durch diesen zusätzlich vorgesehenen Flußmittelbehälter 64 mit seinem Kapillarrohr 70 und dessen Flußmittelkapillare 71 wird somit insgesamt ein Lötgerät zur Verfügung gestellt, welches in einfachster Weise mit einer Hand bedienbar ist und durch welches auch feinste Lötarbeiten optimal durchführbar sind.

Zusammenfassend ist somit festzustellen, daß die Lötspitze selbst beispielsweise eine als Bohrung ausgeführte Kaverne beinhalten kann, die ein Lotdepot darstellt. Es kann somit beispielsweise eine Menge an Lotwerkstoff von etwa einem Volumen von 1 cm³ und mehr, je nach Gesamtgröße der gesamten Lötspitze, schmelzflüssigen Lotwerkstoffes in der erwärmten Lötspitze zur Verfügung stehen. Die Lötspitze kann dabei beispielsweise aus OF-Kupfer bestehen und derart geteilt sein, daß auf einem Grundkörper durch eine einstellbare Federspannung ein schwimmend gelagertes Gegenstück gedrückt wird, wobei diese beiden Bauteile die beiden beispielhaft beschriebenen Spitzenteile bilden. Der dadurch entstehende Spalt im Bereich der Kontaktflächen dieser beiden Spitzenteile stellt die Kapillare dar, durch die der schmelzflüssige Lotwerkstoff mit Hilfe der sogenannten Kapillaraszension als treibende Kraft vom Lotdepot zur Lotaustrittsöffnung gefördert wird. Der Volumenstrom wird durch den Strömungswiderstand in der Kapillare begrenzt, so daß mit der Variation der Kapillarquerschnittsfläche, die durch die Federspannung des elastischen Federelementes bewirkt wird, der Volumenstrom in gewünschter Weise eingestellt werden kann. Der Lotwerkstoff strömt solange aus dem Lotdepot, bis die Kapillare vollständig gefüllt ist.

Die Stirnseite an der Austrittsöffnung der Kapillare ist mit einer passivierten Oberfläche versehen, die vom Lotwerkstoff nicht benetzt werden kann. Eine solche passivierte Oberfläche kann beispielsweise mit einer entsprechenden Chrombeschichtung erreicht werden. Der schmelzflüssige Lotwerkstoff bildet entlang der Austrittsöffnung einen langgezogenen, halbkugelförmigen Tropfen, dessen Oberflächenspannung der Kapillarkraft entgegenwirkt und sich daraufhin ein hydrostatisches Gleichgewicht einstellt.

Somit ist die Tropfengröße, wie bereits erwähnt, eine Funktion der Kapillarkraft und durch die Kapillargeometrie, die Benetzungsfähigkeit der Kapillarflächen sowie durch den hydrostatischen Druck des Lotdepots vorgegeben. Dieser Lottropfen steht nun für den Lötprozeß zur Verfügung. Wird er an die zu lötenden Bauteiloberflächen geführt und werden diese mit Lötwerkstoff des Lottropfens benetzt, so wird die dem Kapillardruck entgegenwirkende Oberflächenspannung der nicht benetzbaren Lötspitzenoberflächen aufgehoben, und das Lot kann durch die Saugwirkung der Fügeflächenbenetzung nachströmen, solange die Lötspitze in Kontakt gehalten wird. Die Lötverbindung ist somit realisiert.

Wird der Kontakt der Lötspitze zur Fügestelle durch Abheben der Spitze unterbrochen, stellt sich sofort wieder das oben angeführte hydrostatische Gleichgewicht ein, so daß an der Austrittsöffnung der Kapillare schlagartig ein neuer Lottropfen gebildet wird, bis wiederum die ebenfalls wachsende Oberflächenspannung den Lotwerkstoffvolumenstrom stoppt. Damit liegt erneut der ursprüngliche Lottropfen an der Lotaustrittsöffnung der Kapillare vor und ein neuer Lötvorgang kann durchgeführt werden.

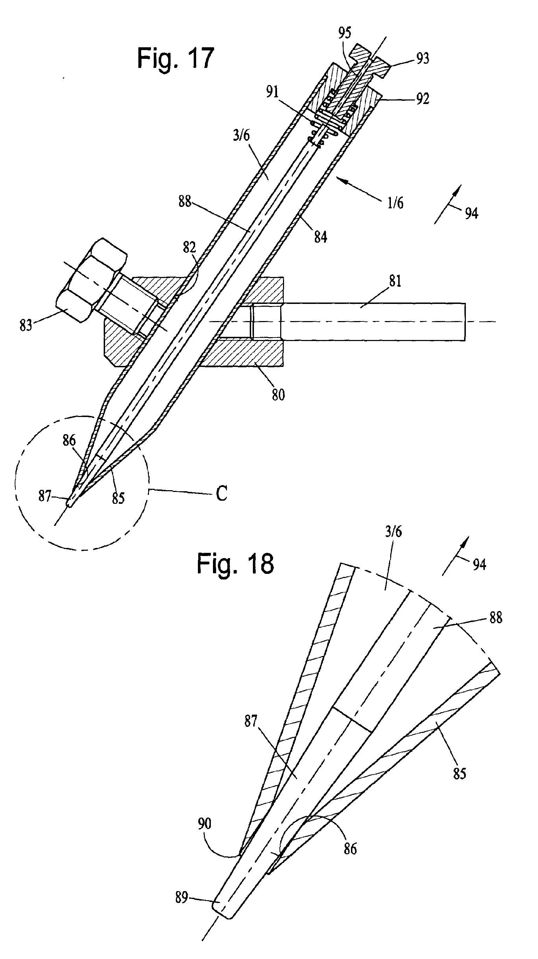

Fig. 17 zeigt ein weiteres Ausführungsbeispiel einer Lötspitze 1/6, welche in einem Lötspitzenhalter 80 schrägstehend eingesetzt ist. Dieser Lötspitzenhalter 80 ist über eine Heizstange 81 thermisch mit der Heizeinrichtung eines herkömmlichen Lötkolbens (in der Zeichnung nicht weiter dargestellt) koppelbar. Zur festsitzenden Halterung der Lötspitze 1/6 weist der Lötspitzenhalter 80 eine entsprechend schräggestellte Durchgangsbohrung 82 auf, in welche die Lötspitze 1/6 axial verstellbar eingeschoben ist. Zur Festlegung der axialen Position der Lötspitze 1/6 in der Durchgangsbohrung 82 ist eine entsprechende Klemmschraube 83 vorgesehen, durch welche die Lötspitze 1/6 in der jeweils gewünschten Position klemmend fixiert werden kann.

Wie aus Fig. 17 weiter ersichtlich ist, besteht die Lötspitze 1/6 aus einem etwa zylindrischen Hohlkörper 84, dessen Innenraum eine entsprechende Kaverne 3/6 zur Aufnahme von Lotwerkstoff bildet. An seinem unteren Ende ist der Hohlkörper 84 etwa kegelförmig zulaufend ausgebildet und weist dementsprechend an diesem unteren Ende einen Lötkegel 85 auf. Dieser Lötkegel 85 weist zur Bildung einer Kapillare dienende Bohrung 86 auf, durch welche die Kaverne 3/6 mit der am Ende der Bohrung 86 befindlichen Lotaustrittsöffnung verbunden wird.

In dieser Bohrung 86 ist ein Lötkern 87 vorgesehen, welcher das untere Ende eines Ventilschaftes 88 bildet. Wie insbesondere aus Fig. 18 ersichtlich ist, welche einen vergrößerten Ausschnitt **C** aus Fig. 17 darstellt, ist der Lötkern 87 zu seinem vorderen Ende 89 hin konisch verjüngt ausgebildet. In der in den Fig. 17 und 18 dargestellten Ausgangslage wird die Bohrung 86 durch den konischen Lötkern 87 zur Kaverne 3/6 hin verschlossen. Im Bereich der Lotaustrittsöffnung wird durch diese konische Ausbildung des Lötkerns 87 andererseits ein umlaufender Ringspalt 90 gebildet, welcher beim vorliegenden Ausführungsbeispiel gemäß der Fig. 17 und 18 die Kapillare bildet.

Wie desweiteren aus den Fig. 17 und 18 ersichtlich ist, überragt der Lötkern 87 die Austrittsöffnung des Ringspaltes 90 in axialer Richtung nach außen.

Desweiteren ist am dem Lötkern 87 gegenüberliegenden Ende des Ventilschaftes 88 eine Axialdruckfeder 91 vorgesehen, durch welche der Ventilschaft 88 mit seinem Lötkern 87 in der in den Fig. 17 und 18 dargestellten Ausgangslage gehalten wird. Dies bedeutet, daß die Bohrung 86 in dieser Ausgangslage durch die Federkraft der Axialdruckfeder 91 permanent verschlossen ist. Somit kann in dieser Ausgangslage auch kein Lotwerkstoff aus der Kaverne 3/6 zum Ringspalt 90 bzw. durch die durch diesen Ringspalt 90 gebildeten Kapillare nach außen gelangen.

Desweiteren ist aus Fig. 17 ersichtlich, daß der Hohlkörper 84 mittels eines entsprechenden Verschlußdeckels 92 rückseitig verschlossen ist. Dieser Verschlußdeckel 92 kann dabei entweder in den Hohlkörper 84 festsitzend eingeschraubt oder auch eingepreßt sein. Weiterhin ist in diesen Hohlkörper 84 eine Stellschraube 93 eingeschraubt, durch deren Axialverstellung der maximale Hubweg des Ventilschaftes 88 zusammen mit dessen Lötkern 87 entgegen der Federkraft in Richtung des Pfeiles 94 variabel einstellbar ist.

Um bei entsprechendem Lotaustritt aus der Kapillare bzw. dem Ringspalt 90 entsprechend Umgebungsluft in die Kaverne 3/6 nachführen zu können, weist die Stellschraube 93 eine zentrale Durchgangsbohrung 95 auf.

Zum Zuführen von Lotwerkstoff wird durch manuellen, axialen Druck auf das vordere Ende 89 des Lötkerns 87 der Lötkern 87 zusammen mit dem Ventilschaft 88 entgegen der Federkraft der Axialdruckfeder 91 in Richtung des Pfeiles 94 axial verstellt, so daß aufgrund der konischen Ausbildung des Lötkerns 87 der Ringspalt 90 vergrößert bzw. die Bohrung 86 als Ringspalt freigegeben wird.

Beim vorliegenden Ausführungsbeispiel ist zumindest der Lötkern 87 aus einem mit Lotwerkstoff benetzbaren Material gefertigt, so daß bei Freigabe des Ringspaltes 90 durch Axialverstellung des Lötkerns 87 Lotwerkstoff entlang des Lötkerns 87 bis zu dessen vorderen Ende 89 fließt und dort ein Lottropfen gebildet wird. Dieser Lötmittelfluß ist in Abhängigkeit des axialen Stellweges durch Einschieben des Lötkerns 87 in Richtung des Pfeiles 94 in die Bohrung 86 einstellbar. Je weiter der Lötkern 87 in Richtung des Pfeiles 94 in die Bohrung 86 eingeschoben wird, um so größer wird der Querschnitt des Ringspaltes 90 aufgrund der konischen Ausbildung des Lötkerns 87 und bewirkt dabei, daß mehr Lotwerkstoff je Zeiteinheit zum vorderen Ende 89 des Lötkerns 87 geführt wird. Bei anschließendem Entlasten des Lötkerns 87 bewegt sich dieser wieder in die in den Fig. 17 und 18 dargestellte Ausgangslage, so daß die Bohrung 86 erneut verschlossen wird.

Desweiteren ist beim vorliegenden Ausführungsbeispiel vorzugsweise vorgesehen, daß der komplette Hohlkörper 84 aus einem nicht mit Lotwerkstoff benetzbaren Werkstoff, wie beispielsweise einer Aluminiumlegierung, gebildet wird. Somit kann sich ein zum Löten benötigter Lottropfen ausschließlich ausgehend vom Ringspalt 90 am Lötkern 87 ausbilden. Der Umgebungsbereich, welcher vom Lötkegel 85 ausgehend vom Ringspalt 90 gebildet wird, ist somit nicht mit Lotwerkstoff benetzbar, so daß eine dosierte, optimale Ausbildung eines Lottropfens am Ende 89 des Lötkerns 87 erreichbar ist, ohne daß ein unbeabsichtigtes Abtropfen des sich bildenden Lottropfens auftreten kann. Auch beim Ausführungsbeispiel der Fig. 17 und 18 wird durch die benetzbare Ausbildung des Lötkerns und die nicht benetzbare Ausbildung des Umgebungsbereiches des als Kapillare wirkenden Ringspaltes 90 die maximal mögliche Größe des sich ausbildenden Lottropfens begrenzt, wie dies bereits zu den vorangegangenen Ausführungsbeispielen beschrieben wurde. Dadurch, daß der Lötkern 87 mit Lotwerkstoff benetzbare Eigenschaften aufweist, kann dieser wie eine herkömmliche Lötspitze verwendet werden, welcher aber bei Bedarf stetes Lotwerkstoff dosiert zugeführt werden kann, ohne den Lötvorgang unterbrechen zu müssen.

Es versteht sich, daß anstatt der Verwendung eines Aluminiumwerkstoffes für den Hohlkörper 84 mit seinem Lötkegel 85 dieser auch aus einem beliebigen anderen Material hergestellt sein kann, sofern dessen Oberfläche zumindest im Umgebungsbereich des Lotaustrittes des Ringspaltes 90 mit einem nicht mit Lotwerkstoff benetzbaren Material beschichtet ist. Dabei kann vorgesehen sei, daß ebenfalls die Bohrung 86 eine derartige Beschichtung trägt. Dies ist allerdings nicht zwingend notwendig.

Somit wird auch durch die erfindungsgemäße Lösung gemäß der Fig. 17 und 18 eine Lötspitze 1/6 zur Verfügung gestellt, mittels welcher aus einer Kaverne 3/6 in einfacher Weise über durch den Ringspalt 90 gebildete Kapillare einer Lötstelle dosiert Lotwerkstoff zugeführt werden kann, ohne daß die Gefahr besteht, daß Lotwerkstoff unkontrolliert nachtropft. Auch durch die erfindungsgemäße Ausgestaltung gemäß des Ausführungsbeispiels der Fig. 17 und 18 wird eine Lötspitze zur Verfügung gestellt, durch deren Einsatz ein "Einhandlöten" sicher ermöglicht wird, ohne daß der Lötspitze von außen Lotwerkstoff zugeführt werden muß.

## Patentansprüche

1. Einhand-Lötgerät mit einer heizbaren Lötspitze (1, 1/3, 1/4, 1/5, 1/6), über welche aus einem Lotdepot (3, 3/3, 3/4, 3/6, 58) einer Fügestelle zweier oder mehrerer Bauteile Lotwerkstoff zugeführt wird,
**dadurch gekennzeichnet,**
**daß** die Lötspitze (1, 1/3, 1/4, 1/5, 1/6) wenigstens eine das Lotdepot (3, 3/3, 3/4, 3/6, 58) mit der Oberfläche der Lötspitze (1, 1/3, 1/4, 1/5, 1/6) verbindende, mit Lotwerkstoff benetzbare Kapillare (9, 9/1, 9/2, 9/3, 9/4, 9/5, 90) aufweist, und
**daß** die Oberfläche der Lötspitze (1, 1/3, 1/4, 1/5, 1/6) im Umgebungsbereich der Lotaustrittsöffnung (8, 8/1, 8/2, 8/3, 27, 45, 90) der Kapillare (9/1, 9/2, 9/3, 9/4, 9/5, 90) lotabweisende, nicht oder nur schwer mit Lotwerkstoff benetzbare Eigenschaften aufweist.

2. Einhand-Lötgerät nach Anspruch 1, **dadurch gekennzeichnet, daß** die Kapillare der Lötspitze (1, 1/6) durch eine vom Lotdepot (3, 3/6) zum äußeren Ende der Lötspitze (1, 1/6) führende Bohrung (9, 9/1, 9/2, 86) gebildet wird.

3. Einhand-Lötgerät nach Anspruch 1 oder 2, **dadurch gekennzeichnet, daß** die Lötspitze (1) einen Grundkörper (10/2) aufweist, der aus einem nicht benetzbaren Werkstoff besteht, und
daß die Kapillare (9/2) durch ein in den Grundkörper (10/2) eingesetztes Kapillarröhrchen (16) gebildet wird, das aus einem mit Lotwerkstoff benetzbaren Werkstoff besteht.

4. Einhand-Lötgerät nach Anspruch 1, **dadurch gekennzeichnet,**
**daß** die Lötspitze (1/4, 1/5) aus zwei aufeinanderliegenden Spitzenteilen (34, 35, 50, 51) gebildet wird, und
**daß** die Kontaktflächen (41, 42, 54, 55) der Spitzenteile (34, 35, 50, 51) mit Lotwerkstoff benetzbar sind, und
**daß** die Außenflächen der Spitzenteile (34, 35, 50, 51) nicht mit Lotwerkstoff benetzbar sind, und
**daß** die beiden aufeinanderliegenden Spitzenteile (34, 35, 50, 51) mit ihren Kontaktflächen (41, 42, 54, 55) die Kapillare (9/4, 9/5) bilden.

5. Einhand-Lötgerät nach Anspruch 4, **dadurch gekennzeichnet, daß** die beiden Spitzenteile (34, 35, 50, 51) durch ein elastisches Federelement (38, 59) miteinander in Verbindung gehalten werden.

6. Einhand-Lötgerät nach Anspruch 5, **dadurch gekennzeichnet, daß** die Federkraft des Federelementes (38, 59) mit welcher die Spitzenteile (34, 35, 50, 51) über ihre Kontaktflächen (41, 42, 54, 55) gegeneinandergedrückt werden, variabel einstellbar ist.

7. Einhand-Lötgerät nach Anspruch 4, 5 oder 6, **dadurch gekennzeichnet, daß** das eine Spitzenteil (35) der Lötspitze (1/4) das andere Spitzenteil (34) zum freien Ende (44) hin zumindest minimal überragt und die Kontaktfläche (42) des überstehenden Abschnittes (44) des einen Spitzenteils (35) eine mit Lotwerkstoff benetzbare Lotaufnahmefläche (45) bildet.

8. Einhand-Lötgerät nach Anspruch 7, **dadurch gekennzeichnet, daß** der Überstand des überragenden Abschnittes (44) des einen Spitzenteils (35) gegenüber dem anderen Spitzenteil (34) variabel einstellbar ist.

9. Einhand-Lötgerät nach Anspruch 1, **dadurch gekennzeichnet, daß** die Lötspitze (1/3) einen Grundkörper (10/3) aufweist, an welchem eine nach Art einer Schreibfeder eines Füllfederhalters ausgebildete Lötfeder (17) befestigt ist, und
daß die Lötfeder (17) einen, die Kapillare (9/3) bildenden Lotspalt (24) aufweist, welcher sich bis zum äußeren Ende der Lötfeder (17) erstreckt, und
daß die Oberfläche der Lötfeder (17) aus einem nicht benetzbaren Werkstoff besteht, und
daß die einander zugewandten Innenflächen des Lotspaltes (24) mit Lotwerkstoff benetzbar ausgebildet sind.

10. Einhand-Lötgerät nach Anspruch 9, **dadurch gekennzeichnet, daß** der Lotspalt (24) der Lötfeder (17) über eine Zuführbohrung (26) und/oder eine Zuführkapillare mit dem Lotdepot (3/3) verbunden ist.

11. Einhand-Lötgerät nach Anspruch 9 oder 10, **dadurch gekennzeichnet, daß** unterschiedliche Lötfedern (17) vorgesehen sind, deren äußeres Ende als halbkugelförmige oder kugelförmige Lötkugel (27) ausgebildet ist, und
daß die Lötkugeln (27) der unterschiedlichen Lötfedern (17) unterschiedliche Durchmesser und/oder unterschiedlich große, mit Lotwerkstoff benetzbare Lotaufnahmeflächen (28) im unmittelbaren Umgebungsbereich des Lotspaltes (24) aufweisen, und
daß die Lotaufnahmefläche (28) durch eine, nicht mit Lotwerkstoff benetzbare Beschichtung (29) der Lötfeder (17) begrenzt ist.

12. Einhand-Lötgerät nach einem der Ansprüche 1 bis 11, **dadurch gekennzeichnet, daß** das Lotdepot aus einer in der Lötspitze (1, 1/3, 1/4, 1/6) angeordneten, von außen mit Lotwerkstoff befüllbaren Kaverne (3, 3/3, 3/4, 3/6) gebildet wird.

13. Einhand-Lötgerät nach Anspruch 12, **dadurch gekennzeichnet, daß** die Kaverne (3, 3/3, 3/4) eine Einfüllöffnung (5, 5/3, 5/4) aufweist, auf welche eine zusätzliche Lotpatrone (47) auswechselbar aufsetzbar ist, und
daß die Lotpatrone (47) mit der Lötspitze (1, 1/3, 1/4) im aufgesetzten Zustand thermisch gekoppelt ist.

14. Einhand-Lötgerät nach einem der Ansprüche 1 bis 11, **dadurch gekennzeichnet, daß** das Lotdepot aus einer auswechselbar in der Lötspitze (1/5) oder im Bereich einer Heizvorrichtung des Einhand-Lötgerätes angeordneten Lotkartusche (58) gebildet wird, welche über einen Lotkanal (52, 53) mit der Kapillare (9/5) verbunden ist.

15. Einhand-Lötgerät nach einem der Ansprüche 1 bis 14, **dadurch gekennzeichnet, daß** im Bereich der Lötspitze (1) wenigstens eine Flußmittelkapillare (71) vorgesehen ist, über welche der Fügestelle Flußmittel aus einem Flußmitteldepot (64) zugeführt werden kann.

16. Einhand-Lötgerät nach Anspruch 15, **dadurch gekennzeichnet, daß** die Flußmittelkapillare (71) aus einem wärmebeständigen Kapillarrohr (70) besteht, das zum Zuführen von Flußmittel mit der Fügestelle und/oder mit der Lötspitze (1) in Kontakt gebracht werden kann.

17. Einhand-Lötgerät nach Anspruch 15, **dadurch gekennzeichnet, daß** die Flußmittelkapillare Bestandteil einer nach Art einer Schreibfeder eines Füllfederhalters ausgebildeten Flußmittelfeder ist und daß die Flußmittelkapillare als Flußmittelspalt ausgebildet ist.

18. Einhand-Lötgerät nach Anspruch 15, 16 oder 17, **dadurch gekennzeichnet, daß** das Flußmitteldepot (64) austauschbar mit dem Lötgerät (61) verbunden ist.

19. Einhand-Lötgerät nach einem der Ansprüche 2, 12 oder 14 bis 16, **dadurch gekennzeichnet, daß** in die Bohrung (86) ein Lötkern (87) eingesetzt ist und die Kapillare als Ringspalt (90) ausgebildet ist.

20. Einhand-Lötgerät nach Anspruch 19, **dadurch gekennzeichnet, daß** die Bohrungswand der Bohrung (86) nicht mit Lotwerkstoff benetzbar und der Lötkern (87) mit Lotwerkstoff benetzbar ausgebildet ist.

21. Einhand-Lötgerät nach Anspruch 19 oder 20, **dadurch gekennzeichnet, daß** der Lötkern (87) mit seinem äußeren Ende (89) zumindest geringfügig aus der Bohrung (86) herausragt und zu diesem Ende (89) hin konisch verjüngt ausgebildet ist, und
daß der Lötkern (87) in einer axialen Ausgangslage den Ringspalt (90) zur Kavität (3/6) hin ventilartig verschließt und zum Öffnen des Ringspaltes (90) bzw. der Kapillare axial entgegen einer Federkraft in die Bohrung (86) hinein verstellbar ist.
